(19) Europäisches Patentamt
European Patent Office
Office européen des brevets

(11) **EP 4 618 613 A1**

(12) **EUROPEAN PATENT APPLICATION**
published in accordance with Art. 153(4) EPC

(43) Date of publication:
**17.09.2025 Bulletin 2025/38**

(21) Application number: **23899816.5**

(22) Date of filing: **27.11.2023**

(51) International Patent Classification (IPC):
**H04W 24/10** (2009.01)

(52) Cooperative Patent Classification (CPC):
**H04W 24/02; H04W 24/10; H04W 40/12; H04W 40/22**

(86) International application number:
**PCT/CN2023/134332**

(87) International publication number:
**WO 2024/120237 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 06.12.2022 CN 202211558857
29.12.2022 CN 202211717133
16.02.2023 CN 202310166316

(71) Applicant: **Huawei Technologies Co., Ltd.**
**Shenzhen, Guangdong 518129 (CN)**

(72) Inventors:
• **YAO, Chuting**
**Shenzhen, Guangdong 518129 (CN)**
• **XU, Haibo**
**Shenzhen, Guangdong 518129 (CN)**
• **WANG, Rui**
**Shenzhen, Guangdong 518129 (CN)**
• **PENG, Wenjie**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) This application relates to a communication method and apparatus. A remote device receives measurement configuration information, which is used to configure a measurement event. The measurement event is an event that signal quality of a candidate relay device becomes a first offset better than signal quality of a serving relay device. The remote device sends, to a network device, a measurement report including a first measurement result and first indication information. The first measurement result is a result of measurement performed by the remote device based on the measurement event, and the first indication information indicates a measurement type corresponding to the first measurement result. The measurement report sent by the remote device to the network device may include the first indication information, to indicate the measurement type corresponding to the measurement result. For example, whether the measurement result is SL-RSRP or SD-RSRP can be determined based on the first indication information. In this way, the network device can consider more factors when deciding whether the remote device is to perform path switch, to improve decision accuracy of the network device.

FIG. 2

**Description**

CROSS-REFERENCE TO RELATED APPLICATIONS

This application claims priorities to Chinese Patent Application No. 202211558857.6, filed with the China National Intellectual Property Administration on December 6, 2022, and entitled "SL RELAY MEASUREMENT METHOD", to Chinese Patent Application No. 202211717133.1, filed with the China National Intellectual Property Administration on December 29, 2022, and entitled "COMMUNICATION METHOD AND APPARATUS", and to Chinese Patent Application No. 202310166316.7, filed with the China National Intellectual Property Administration on February 16, 2023, and entitled "COMMUNICATION METHOD AND APPARATUS", all of which are incorporated herein by reference in their entireties.

**TECHNICAL FIELD**

This application relates to the field of communication technologies, and in particular, to a communication method and apparatus.

**BACKGROUND**

A remote (remote) user equipment (user equipment, UE) may access a network via a relay (relay) UE. To be specific, the remote UE may be connected to the network through an indirect (indirect) path between the remote UE and the relay UE. In addition, to ensure service continuity of the remote UE, path switch (path switch) of the remote UE between indirect paths is considered. In other words, the remote UE may switch from one indirect path to another indirect path. To perform path switch or relay UE reselection, the remote UE usually performs measurement before performing path switch or relay UE reselection based on a measurement result. Therefore, it is currently discussed whether a Z2 measurement event is supported, that is, a candidate relay UE becomes an offset (offset) better than a serving relay UE. A network device may configure the Z2 measurement event for the remote UE. The remote UE may measure sidelink (sidelink, SL) channel quality of the candidate relay UE and the serving relay UE on the indirect links based on the configuration of the network device, and report a measurement result to the network device when the Z2 measurement event is satisfied, so that the network device can determine whether the remote UE is to perform path switch or relay UE reselection.

The remote UE may measure an SL-reference signal received power (reference signal received power, RSRP) or a sidelink discovery (sidelink discovery, SD)-RSRP of the relay UE, which is used as a measurement result of the SL channel quality of the relay UE. The SL-RSRP is obtained by measuring SL unicast data, and the SD-RSRP is obtained by measuring a discovery message (discovery message) on an SL path. Transmit power of the SL unicast data is a result of power control performed based on an SL pathloss, and power control is not performed on transmit power of the discovery message based on the SL pathloss. Therefore, the SL-RSRP may be inconsistent with the SD-RSRP. For example, a measurement result of the candidate relay UE is SD-RSRP, and a measurement result of the serving relay UE is SL-RSRP. Although the measurement result obtained by the remote UE indicates that the measurement result of the candidate relay UE becomes an offset better than the measurement result of the serving relay UE, actual channel quality of the serving relay UE may be good. Because power control is performed on the transmit power of the SL unicast data based on the SL pathloss, the SL-RSRP corresponding to the SL unicast data is low. In this case, the network device decides, based on the measurement result, whether the remote UE is to perform path switch or relay UE reselection. A decision result may be inaccurate.

It can be learned that currently, accuracy of deciding whether the remote UE is to perform path switch or relay UE reselection is not high. Alternatively, in another scenario in which another device may decide whether the remote UE is to perform path switch or relay UE reselection, there is a similar problem that accuracy of a decision result is not high.

**SUMMARY**

Embodiments of this application provide a communication method and apparatus, to improve accuracy of deciding whether a remote device performs path switch.

In descriptions of this part, determining (or deciding) whether a remote UE is to perform path switch may be understood as determining (or deciding) whether the remote UE is to perform path switch or determining (or deciding) whether the remote UE is to perform relay UE reselection (for example, reselects a serving relay UE).

According to a first aspect, a first communication method is provided. The method may be performed by a remote device, or may be performed by another device that includes a function of the remote device, or may be performed by a chip system (or a chip) or another functional module. The chip system or the functional module can implement the function of the remote device. The chip system or the functional module is, for example, disposed in the remote device. The remote device is, for example, a terminal device or a network device. The method includes: receiving measurement configuration information, where the measurement configuration information includes a measurement event, and the measurement event is an event that signal quality of a candidate relay device becomes a first offset better than signal quality of a serving relay device; and sending a measurement report to a network device, where the measurement report includes a first measurement result and first indication information, the first measurement result is a result of measurement performed by the remote device based on the measurement configuration information, and the first indication information indicates a measurement type corresponding to the first measurement result.

In this embodiment of this application, the measurement report sent by the remote device to the network device may include the first indication information, to indicate a measurement type corresponding to a measurement result. For example, whether the measurement result is SL-RSRP or SD-RSRP can be determined based on the first indication information. In this way, the network device can consider more factors when deciding whether the remote device is to perform path switch, to improve decision accuracy of the network device.

In an optional implementation, the measurement type corresponding to the first measurement result includes one or more of the following: a measurement result of a first relay device is SL-RSRP; a measurement result of a first relay device is SD-RSRP; a measurement result of a second relay device is SL-RSRP; a measurement result of a second relay device is SD-RSRP; whether a measurement result of a first relay device is SL-RSRP; or whether a measurement result of a second relay device is SL-RSRP. The first relay device is a serving relay device of the remote device, and the second relay device is a candidate relay device of the remote device.

In an optional implementation, the measurement report further indicates a first pathloss and/or a second pathloss; or the first measurement result indicates a first pathloss and/or a second pathloss. The first pathloss is a sidelink pathloss between the remote device and the first relay device, the second pathloss is a sidelink pathloss between the remote device and the second relay device, the first relay device is the serving relay device of the remote device, and the second relay device is the candidate relay device of the remote device. The remote device may further report the SL pathloss together, so that the network device may further decide, with reference to the SL pathloss, whether the remote device performs path switch, to further improve the decision accuracy of the network device.

In an optional implementation, indicating the first pathloss includes: including a value of the first pathloss; or including second indication information, where the second indication information indicates a range to which a value of the first pathloss belongs, or indicates whether the value of the first pathloss is greater than a first threshold. The measurement report or the first measurement result may directly include the value of the first pathloss, where the indication is clear; or may indicate the range of the first pathloss, to help reduce transmission overheads of the measurement report. A manner of indicating the second pathloss by the measurement report or the first measurement result is similar.

In an optional implementation, the method further includes: sending first request information to the first relay device, where the first request information is used to query for sidelink power control information of the first relay device, or query for the sidelink pathloss of the first relay device; and receiving first information from the first relay device, where the first information indicates whether the first relay device performs sidelink power control based on the sidelink pathloss, or indicates the first pathloss. To report the first pathloss, the remote device may first obtain the first pathloss. For example, a manner in which the remote device obtains the first pathloss is that the remote device calculates the first pathloss by itself. For another example, another manner in which the remote device obtains the first pathloss is that the remote device receives the first pathloss from the first relay device.

In an optional implementation, the method further includes: sending second request information to the second relay device, where the second request information is used to query for sidelink power control information of the second relay device, or query for the sidelink pathloss of the second relay device; and receiving second information from the second relay device, where the second information indicates whether the second relay device performs sidelink power control based on the sidelink pathloss, or indicates the second pathloss. To report the second pathloss, the remote device may first obtain the second pathloss. For example, a manner in which the remote device obtains the second pathloss is that the remote device calculates the second pathloss by itself. For another example, another manner in which the remote device obtains the second pathloss is that the remote device receives the second pathloss from the second relay device.

In an optional implementation, sending the measurement report corresponding to the measurement event to the network device includes: if the measurement result of the first relay device is less than a second threshold, and/or the sidelink pathloss between the remote device and the first relay device is greater than a third threshold, sending the measurement report to the network device, where the first relay device is the serving relay device of the remote device. If the measurement result of the first relay device obtained by the remote device is less than (or less than or equal to) the second threshold, it indicates that SL channel quality between the first relay device and the remote device is not good. In this case, the remote device may consider path switch, and therefore may send the measurement report. If the SL pathloss between the remote device and the first relay device is greater than (or greater than or equal to) the third threshold, it indicates that a distance between the remote device and the first relay device is long. In this case, if the measurement event is satisfied, it may indicate that SL channel quality between the remote device and the second relay device is greater than the SL channel quality between the remote device and the first relay device. In this case, the remote device may consider path switch, and therefore may send the measurement report.

In an optional implementation, the method further includes: if the measurement result of the first relay device is less than the second threshold, and/or the sidelink pathloss between the remote device and the first relay device is greater than the third threshold, determining that a first measurement offset is used for measurement in a configured measurement event, where the first measurement offset is one of at least one first offset for a same measurement event; and if the measurement result of the first relay device is greater than the second threshold, and/or the sidelink pathloss between the remote device and the first relay device is less than the third threshold, determining that a second measurement offset is used for measurement in the configured measurement event, where the second measurement offset is one of the at least one first offset for the same measurement event. When the measurement result satisfies the measurement event, the remote device sends the measurement report; or when the measurement result does not satisfy the measurement event, the remote device skips sending the measurement report. In this way, the remote device determines a more appropriate first offset based on a condition between the remote device and the first relay device, to properly trigger reporting to the network device.

In an optional implementation, the method further includes: if the measurement result of the first relay device is greater than (or greater than or equal to) the second threshold, and/or the sidelink pathloss between the remote device and the first relay device is less than (or less than or equal to) the third threshold, skipping sending the measurement report, where the first relay device is the serving relay device of the remote device. If the measurement result of the first relay device obtained by the remote device is greater than (or greater than or equal to) the second threshold, it indicates that the SL channel quality between the first relay device and the remote device is good. The remote device may not need to perform path switch, and therefore may not send the measurement report. In this case, the network device does not need to decide whether the remote device is to perform path switch. If the SL pathloss between the remote device and the first relay device is less than (or less than or equal to) the third threshold, it indicates that the distance between the remote device and the first relay device is short. In this case, if the measurement event is satisfied, transmit power of the first relay device may be low because the first relay device performs SL power control based on the SL pathloss. Therefore, the remote device may not need to perform path switch, and may not send the measurement report. In this case, the network device does not need to decide whether the remote device is to perform path switch.

In an optional implementation, the method further includes: if the measurement result of the first relay device is less than a second threshold, and/or the sidelink pathloss between the remote device and the first relay device is greater than a third threshold, starting measurement for a candidate relay device of the remote device, where the first relay device is the serving relay device of the remote device. If the measurement result of the first relay device obtained by the remote device is less than (or less than or equal to) the second threshold, it indicates that SL channel quality between the first relay device and the remote device is not good. In this case, the remote device may consider path switch, and therefore may start measurement for the candidate relay device. If the SL pathloss between the remote device and the first relay device is greater than (or greater than or equal to) the third threshold, it indicates that a distance between the remote device and the first relay device is long. In this case, if the measurement event is satisfied, it may indicate that SL channel quality between the remote device and the second relay device is greater than the SL channel quality between the remote device and the first relay device. In this case, the remote device may consider path switch, and therefore may start measurement for the candidate relay device.

In an optional implementation, the method further includes: if the measurement result of the first relay device is greater than the second threshold, and/or the sidelink pathloss between the remote device and the first relay device is less than the third threshold, skipping measuring the candidate relay device of the remote device, where the first relay device is the serving relay device of the remote device. If the measurement result of the first relay device obtained by the remote device is greater than (or greater than or equal to) the second threshold, it indicates that the SL channel quality between the first relay device and the remote device is good. The remote device may not need to perform path switch, and therefore may not need to measure the candidate relay device. If the SL pathloss between the remote device and the first relay device is less than (or less than or equal to) the third threshold, it indicates that the distance between the remote device and the first relay device is short. In this case, if the measurement event is satisfied, transmit power of the first relay device may be low because the first relay device performs the SL power control based on the SL pathloss. Therefore, the remote device may not need to measure the candidate relay device.

In an optional implementation, the measurement configuration information includes information about at least one measurement manner corresponding to the measurement event, where different measurement manners are corresponding to different first offsets or the different measurement manners are corresponding to a same first offset. The different first offsets may be configured for the different measurement manners, so that the first offsets can compensate for errors caused by different measurement types in the corresponding measurement manners. Alternatively, the same first offset may be configured for the different measurement manners, to simplify a configuration process and simplify implementation of the remote device.

In an optional implementation, the at least one measurement manner includes one or more of the following: measuring the SL-RSRP of the serving relay device, and measuring the SL-RSRP of the candidate relay device; measuring the SD-RSRP of the serving relay device, and measuring the SD-RSRP of the candidate relay device;

measuring the SL-RSRP of the serving relay device, and measuring the SD-RSRP of the candidate relay device; or measuring the SD-RSRP of the serving relay device, and measuring the SL-RSRP of the candidate relay device.

In an optional implementation, the measurement configuration information is further used to configure one or more of the following: whether to report a measurement type corresponding to a measurement result of the measurement event; whether to report a sidelink pathloss; the first threshold, where the first threshold is used by the remote device to determine a sidelink pathloss indicated by the measurement report; the second threshold, where the second threshold is a threshold corresponding to the measurement result of the first relay device, and the second threshold is used by the remote device to determine whether to send the measurement report, or used by the remote device to determine whether to measure the candidate relay device, and the first relay device is the serving relay device of the remote device; or the third threshold, where the third threshold is a sidelink pathloss threshold, and the third threshold is used by the remote device to determine whether to send the measurement report, or used by the remote device to determine whether to measure the candidate relay device. The foregoing parameters may be configured by using the measurement configuration information, or may be predefined in a protocol, or may be preconfigured in the remote device.

According to a second aspect, a second communication method is provided. The method may be performed by a network device, may be performed by another device that includes a function of the network device, or performed by a chip system (or a chip) or another functional module. The chip system or the functional module can implement the function of the network device. The chip system or the functional module is, for example, disposed in the network device. The network device includes, for example, an access network device and/or a core network device. The access network device is, for example, a base station. The method includes: sending measurement configuration information to a remote device, where the measurement configuration information includes a measurement event, and the measurement event is an event that signal quality of a candidate relay device becomes a first offset better than signal quality of a serving relay device; and receiving a measurement report corresponding to the measurement configuration information from the remote device, where the measurement report includes a first measurement result and first indication information, the first measurement result is a result of measurement performed by the remote device based on the measurement configuration information, and the first indication information indicates a measurement type corresponding to the first measurement result.

In an optional implementation, the measurement type corresponding to the first measurement result includes one or more of the following: a measurement result of a first relay device is SL-RSRP; a measurement result of a first relay device is SD-RSRP; a measurement result of a second relay device is SL-RSRP; a measurement result of a second relay device is SD-RSRP; whether a measurement result of a first relay device is SL-RSRP; or whether a measurement result of a second relay device is SL-RSRP. The first relay device is a serving relay device of the remote device, and the second relay device is a candidate relay device of the remote device.

In an optional implementation, the measurement report further indicates a first pathloss and/or a second pathloss; or the first measurement result indicates a first pathloss and/or a second pathloss. The first pathloss is a sidelink pathloss between the remote device and the first relay device, the second pathloss is a sidelink pathloss between the remote device and the second relay device, the first relay device is the serving relay device of the remote device, and the second relay device is the candidate relay device of the remote device.

In an optional implementation, indicating the first pathloss includes: including a value of the first pathloss; or including second indication information, where the second indication information indicates a range to which a value of the first pathloss belongs, or indicates whether the value of the first pathloss is greater than a first threshold.

In an optional implementation, the measurement configuration information includes information about at least one measurement manner corresponding to the measurement event, where different measurement manners are corresponding to different first offsets or the different measurement manners are corresponding to a same first offset.

In an optional implementation, the at least one measurement manner includes one or more of the following: measuring the SL-RSRP of the serving relay device, and measuring the SL-RSRP of the candidate relay device; measuring the SD-RSRP of the serving relay device, and measuring the SD-RSRP of the candidate relay device; measuring the SL-RSRP of the serving relay device, and measuring the SD-RSRP of the candidate relay device; or measuring the SD-RSRP of the serving relay device, and measuring the SL-RSRP of the candidate relay device.

In an optional implementation, the measurement configuration information is further used to configure one or more of the following: whether to report a measurement type corresponding to a measurement result of the measurement event; whether to report a sidelink pathloss; the first threshold, where the first threshold is used by the remote device to determine a sidelink pathloss indicated by the measurement report; a second threshold, where the second threshold is a threshold corresponding to the measurement result of the first relay device, and the second threshold is used by the remote device to determine whether to send the measurement report, or used by the remote device to determine whether to measure the candidate relay device, and the first relay device is the serving relay device of the remote device; or a third threshold, where the third threshold is a sidelink pathloss threshold, and the third threshold is used by the remote device to determine whether to send the measurement report, or used by the remote device to determine whether to measure the candidate relay device.

For technical effects brought by the second aspect or the optional implementations, refer to the descriptions of the technical effects of the first aspect or the corresponding implementations.

According to a third aspect, a third communication method is provided. The method may be performed by a remote device, or may be performed by another device that includes a function of the remote device, or may be performed by a chip system (or a chip) or another functional module. The chip system or the functional module can implement the function of the remote device. The chip system or the functional module is, for example, disposed in the remote device. The remote device is, for example, a terminal device or a network device. The method includes: receiving measurement configuration information, where the measurement configuration information includes a measurement event; and sending a measurement report to a network device, where the measurement report includes a measurement result corresponding to at least one measurement event in the measurement event. The measurement configuration information includes any one or more of the following measurement events: an event that SL-RSRP of a candidate relay device becomes a first offset better than SL-RSRP of a serving relay device; an event that SD-RSRP of a candidate relay device becomes a second offset better than SD-RSRP of a serving relay device; an event that SL-RSRP of a candidate relay device becomes a third offset better than SD-RSRP of a serving relay device; or an event that SD-RSRP of a candidate relay device becomes a fourth offset better than SL-RSRP of a serving relay device.

In this embodiment of this application, the network device may configure different measurement events, to distinguish between measurement types, so that the network device can learn of a specific situation on a current SL, and can also obtain more information to determine whether the remote device performs path switch. This reduces a probability that the network device improperly or incorrectly determines whether the remote device performs path switch.

In an optional implementation, any plurality of items in the first offset, the second offset, the third offset, and the fourth offset are equal or completely unequal.

In an optional implementation, the measurement report further indicates a first pathloss and/or a second pathloss; or the first measurement result indicates a first pathloss and/or a second pathloss. The first pathloss is a sidelink pathloss between the remote device and the first relay device, the second pathloss is a sidelink pathloss between the remote device and the second relay device, the first relay device is the serving relay device of the remote device, and the second relay device is the candidate relay device of the remote device.

In an optional implementation, indicating the first pathloss includes: including a value of the first pathloss; or including second indication information, where the second indication information indicates a range to which a value of the first pathloss belongs, or indicates whether the value of the first pathloss is greater than a first threshold.

In an optional implementation, the method further includes: sending first request information to the first relay device, where the first request information is used to query for sidelink power control information of the first relay device, or query for the sidelink pathloss of the first relay device; and receiving first information from the first relay device, where the first information indicates whether the first relay device performs sidelink power control based on the sidelink pathloss, or indicates the first pathloss.

In an optional implementation, the method further includes: sending second request information to the second relay device, where the second request information is used to query for sidelink power control information of the second relay device, or query for the sidelink pathloss of the second relay device; and receiving second information from the second relay device, where the second information indicates whether the second relay device performs sidelink power control based on the sidelink pathloss, or indicates the second pathloss.

In an optional implementation, sending the measurement report corresponding to the measurement event to the network device includes: if a measurement result of the first relay device is less than a second threshold, and/or the sidelink pathloss between the remote device and the first relay device is greater than a third threshold, sending the measurement report to the network device, where the first relay device is the serving relay device of the remote device.

In an optional implementation, the method further includes: if the measurement result of the first relay device is greater than the second threshold, and/or the sidelink pathloss between the remote device and the first relay device is less than the third threshold, skipping sending the measurement report, where the first relay device is the serving relay device of the remote device.

In an optional implementation, the method further includes: if a measurement result of the first relay device is less than a second threshold, and/or the sidelink pathloss between the remote device and the first relay device is greater than a third threshold, starting measurement for a candidate relay device of the remote device, where the first relay device is the serving relay device of the remote device.

In an optional implementation, the method further includes: if the measurement result of the first relay device is greater than the second threshold, and/or the sidelink pathloss between the remote device and the first relay device is less than the third threshold, skipping measuring the candidate relay device of the remote device, where the first relay device is the serving relay device of the remote device.

In an optional implementation, the measurement configuration information is further used to configure one or more of the following: whether to report a sidelink pathloss; the first threshold, where the first threshold is used by the remote device to determine a sidelink pathloss indicated by the measurement report; the second threshold, where the second threshold is a threshold corresponding to the measurement result of the first relay device, and the second threshold is used by the remote device to determine whether to send the measurement report, or used by the remote device to determine whether to measure the candidate relay device, where the first relay device is the serving relay device of the remote device; or the third threshold, where the third threshold is a sidelink pathloss threshold, and the third threshold is used by the remote device to determine whether to send the measurement report, or used by the remote device to determine whether to measure the candidate relay device.

For technical effects brought by the optional implementations of the third aspect, refer to the descriptions of the technical effects of the first aspect or the corresponding implementations.

According to a fourth aspect, a fourth communication method is provided. The method may be performed by a network device, may be performed by another device that includes a function of the network device, or performed by a chip system (or a chip) or another functional module. The chip system or the functional module can implement the function of the network device. The chip system or the functional module is, for example, disposed in the network device. The network device includes, for example, an access network device and/or a core network device. The access network device is, for example, a base station. The method includes: sending measurement configuration information to a remote device, where the measurement configuration information includes a measurement event; and receiving a measurement report from the remote device, where the measurement report includes a measurement result corresponding to at least one measurement event in the measurement event, where the measurement configuration information includes any one or more of the following measurement events: an event that SL-RSRP of a candidate relay device becomes a first offset better than SL-RSRP of a serving relay device; an event that SD-RSRP of a candidate relay device becomes a second offset better than SD-RSRP of a serving relay device; an event that SL-RSRP of a candidate relay device becomes a third offset better than SD-RSRP of a serving relay device; or an event that SD-RSRP of a candidate relay device becomes a fourth offset better than SL-RSRP of a serving relay device.

In an optional implementation, the measurement report further indicates a first pathloss and/or a second pathloss; or the first measurement result indicates a first pathloss and/or a second pathloss. The first pathloss is a sidelink pathloss between the remote device and the first relay device, the second pathloss is a sidelink pathloss between the remote device and the second relay device, the first relay device is the serving relay device of the remote device, and the second relay device is the candidate relay device of the remote device.

In an optional implementation, indicating the first pathloss includes: including a value of the first pathloss; or including second indication information, where the second indication information indicates a range to which a value of the first pathloss belongs, or indicates whether the value of the first pathloss is greater than a first threshold.

In an optional implementation, the measurement configuration information is further used to configure one or more of the following: whether to report a sidelink pathloss; the first threshold, where the first threshold is used by the remote device to determine a sidelink pathloss indicated by the measurement report; a second threshold, where the second threshold is a threshold corresponding to the measurement result of the first relay device, and the second threshold is used by the remote device to determine whether to send the measurement report, or used by the remote device to determine whether to measure the candidate relay device, where the first relay device is the serving relay device of the remote device; or a third threshold, where the third threshold is a sidelink pathloss threshold, and the third threshold is used by the remote device to determine whether to send the measurement report, or used by the remote device to determine whether to measure the candidate relay device.

For technical effects brought by the fourth aspect or the optional implementations of the fourth aspect, refer to the descriptions of the technical effects of the third aspect or the corresponding implementations.

According to a fifth aspect, a fifth communication method is provided. The method may be performed by a remote device, or may be performed by another device that includes a function of the remote device, or may be performed by a chip system (or a chip) or another functional module. The chip system or the functional module can implement the function of the remote device. The chip system or the functional module is, for example, disposed in the remote device. The remote device is, for example, a terminal device or a network device. The method includes: receiving configuration information, where the configuration information includes at least one parameter used to configure a first resource pool, the at least one parameter includes a first parameter, and the first parameter is used by the remote device to perform sidelink power control based on a pathloss between the remote device and a network device; and if the remote device is out of coverage, ignoring the first parameter, or ignoring the at least one parameter, or considering that the first parameter is not configured or provided, or disabling the first parameter, or disabling the sidelink power control performed based on the pathloss between the remote device and the network device.

In this embodiment of this application, the remote device out of the coverage may ignore the first parameter. In this case, the remote device does not need to perform the SL power control based on a pathloss of a Uu interface when the remote device is out of the coverage, to improve a success rate of calculating SL transmit power, so as to improve a success rate of SL transmission.

In an optional implementation, the receiving configuration information includes: receiving the configuration information from the network device via a relay device; or receiving the configuration information from a relay device, where the relay device is a serving relay device of the remote device.

In an optional implementation, the configuration information is included in a system message, or is included in an RRC message.

According to a sixth aspect, a sixth communication method is provided. The method may be performed by a remote device, or may be performed by another device that includes a function of the remote device, or may be performed by a chip system (or a chip) or another functional module. The chip system or the functional module can implement the function of the remote device. The chip system or the functional module is, for example, disposed in the remote device. The remote device is, for example, a terminal device or a network device. The method includes: sending first indication information, where the first indication information indicates that the remote device is out of coverage; and receiving first configuration information, where the first configuration information includes at least one parameter used to configure a first resource pool, the at least one parameter does not include a first parameter, and the first parameter is used by the remote device to perform sidelink power control based on a pathloss between the remote device and a network device.

The remote device may indicate that the remote device is out of the coverage. In this case, the remote device does not receive the first parameter. In this way, the remote device out of the coverage does not need to perform the SL power control based on a pathloss of a Uu interface, to improve a success rate of calculating SL transmit power, so as to improve a success rate of SL transmission. In addition, the remote device needs to perform only corresponding processing based on a received parameter, without changing execution logic of the remote device.

In an optional implementation, sending the first indication information includes: sending the first indication information to the network device via the relay device; or sending the first indication information to the relay device, where the relay device is a serving relay device of the remote device.

In an optional implementation, the first indication information is included in an RRC message, SUI, a PC5-RRC message, a PC5-S message, or a discovery message.

According to a seventh aspect, a seventh communication method is provided. The method may be performed by a network device, may be performed by another device that includes a function of the network device, or performed by a chip system (or a chip) or another functional module. The chip system or the functional module can implement the function of the network device. The chip system or the functional module is, for example, disposed in the network device. The network device includes, for example, an access network device and/or a core network device. The access network device is, for example, a base station. The method includes: receiving first indication information from a remote device via a relay device, where the first indication information indicates that the remote device is out of coverage; and sending first configuration information, where the first configuration information includes at least one parameter used to configure a first resource pool, the at least one parameter does not include a first parameter, and the first parameter is used by the remote device to perform sidelink power control based on a pathloss between the remote device and the network device. In this embodiment of this application, the network device is enabled to learn that the remote device is out of the coverage, so that parameters delivered by the network device can be reduced, and transmission overheads can be reduced. In addition, the remote device needs to perform processing based only on a received parameter, without changing SL power control logic of the remote device.

According to an eighth aspect, an eighth communication method is provided. The method may be performed by a relay device, may be performed by another device that includes a function of the relay device, or performed by a chip system (or a chip) or another functional module. The chip system or the functional module can implement the function of the relay device. The chip system or the functional module is, for example, disposed in the relay device. The relay device is, for example, a serving relay device of a remote device. The relay device is, for example, a terminal device or a network device. The method includes: receiving first indication information from a remote device, where the first indication information indicates that the remote device is out of coverage; receiving second configuration information from a network device, where the second configuration information includes at least one parameter used to configure a first resource pool for the remote device, the at least one parameter includes a first parameter, and the first parameter is used by the remote device to perform sidelink power control based on a pathloss between the remote device and the network device; and sending first configuration information to the remote device, where the first configuration information includes another parameter other than the first parameter in the at least one parameter, or ignoring the second configuration information. In this embodiment of this application, the serving relay device is enabled to learn that the remote device is out of the coverage, so that parameters sent by the serving relay device can be reduced, and transmission overheads can be reduced. In addition, the remote device needs to perform processing based only on a received parameter, without changing SL power control logic of the remote device.

In an optional implementation, the method further includes: removing the first parameter included in the second configuration information, to obtain the first configuration information.

According to a ninth aspect, a communication apparatus is provided. The communication apparatus may be the remote device according to any one of the first aspect to the eighth aspect. The communication apparatus has a function of the remote device. The communication apparatus is, for example, a remote device, or a large device including the remote device, or a functional module in the remote device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive measurement configuration information. The measurement configuration information includes a measurement event, and the measurement event is an event that signal quality of a candidate relay device becomes a first offset better than signal quality of a serving relay device. The transceiver unit (or the sending unit) is configured to send a measurement report to a network device. The measurement report includes a first measurement result and first indication information, the first measurement result is a result of measurement performed by the remote device based on the measurement configuration information, and the first indication information indicates a measurement type corresponding to the first measurement result.

In an optional implementation, the transceiver unit (or the receiving unit) is configured to receive measurement configuration information. The measurement configuration information includes a measurement event. The transceiver unit (or the sending unit) is configured to send a measurement report to a network device. The measurement report includes a measurement result corresponding to at least one measurement event in the measurement event. The measurement configuration information includes any one or more of the following measurement events: an event that SL-RSRP of a candidate relay device becomes a first offset better than SL-RSRP of a serving relay device; an event that SD-RSRP of a candidate relay device becomes a second offset better than SD-RSRP of a serving relay device; an event that SL-RSRP of a candidate relay device becomes a third offset better than SD-RSRP of a serving relay device; or an event that SD-RSRP of a candidate relay device becomes a fourth offset better than SL-RSRP of a serving relay device.

In an optional implementation, the transceiver unit (or the receiving unit) is configured to receive configuration information. The configuration information includes at least one parameter used to configure a first resource pool, the at least one parameter includes a first parameter, and the first parameter is used by the remote device to perform sidelink power control based on a pathloss between the remote device and a network device. The processing unit is configured to: if the remote device is out of coverage, ignore the first parameter, or ignore the at least one parameter, or consider that the first parameter is not configured or provided, or disable the first parameter, or disable the sidelink power control performed based on the pathloss between the remote device and the network device.

In an optional implementation, the transceiver unit (or the sending unit) is configured to send first indication information. The first indication information indicates that the remote device is out of coverage. The transceiver unit (or the receiving unit) is configured to receive first configuration information. The first configuration information includes at least one parameter used to configure a first resource pool, the at least one parameter does not include a first parameter, and the first parameter is used by the remote device to perform sidelink power control based on a pathloss between the remote device and a network device.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the remote device according to any one of the first aspect to the eighth aspect.

According to a tenth aspect, a communication apparatus is provided. The communication apparatus may be the network device according to any one of the first aspect to the eighth aspect. The communication apparatus has a function of the network device. The communication apparatus is, for example, a network device, or a large device including the network device, or a functional module in the network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the ninth aspect.

In an optional implementation, the transceiver unit (or a sending unit) is configured to send measurement configuration information to a remote device. The measurement configuration information includes a measurement event, and the measurement event is an event that signal quality of a candidate relay device becomes a first offset better than signal quality of a serving relay device. The transceiver unit (or a receiving unit) is configured to receive a measurement report corresponding to the measurement configuration information from the remote device. The measurement report includes a first measurement result and first indication information, the first measurement result is a result of measurement performed by the remote device based on the measurement configuration information, and the first indication information indicates a measurement type corresponding to the first measurement result.

In an optional implementation, the transceiver unit (or the sending unit) is configured to send measurement configuration information to a remote device. The measurement configuration information includes a measurement event. The transceiver unit (or the receiving unit) is configured to receive a measurement report from the remote device. The measurement report includes a measurement result corresponding to at least one measurement event in the measurement event. The measurement configuration information includes any one or more of the following measurement events: an event that SL-RSRP of a candidate relay device becomes a first offset better than SL-RSRP of a serving relay device; an event that SD-RSRP of a candidate relay device becomes a second offset better than SD-RSRP of a serving relay device; an event that SL-RSRP of a candidate relay device becomes a third offset better than SD-RSRP of a serving relay device; or an event that SD-RSRP of a candidate relay device becomes a fourth offset better than SL-RSRP of a serving relay device.

In an optional implementation, the transceiver unit (or the receiving unit) is configured to receive first indication information from a remote device via a relay device. The first indication information indicates that the remote device is out of coverage. The transceiver unit (or the sending unit) is configured to send first configuration information. The first configuration information includes at least one parameter used to configure a first resource pool, the at least one parameter does not include a first parameter, and the first parameter is used by the remote device to perform sidelink power control based on a pathloss between the remote device and the network device.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the network device according to any one of the first aspect to the eighth aspect.

According to an eleventh aspect, a communication apparatus is provided. The communication apparatus may be the relay device according to any one of the first aspect to the eighth aspect. The communication apparatus has a function of the relay device. The communication apparatus is, for example, a relay device, or a large device including the relay device, or a functional module in the relay device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the ninth aspect.

In an optional implementation, the transceiver unit (or a receiving unit) is configured to receive first indication information from a remote device. The first indication information indicates that the remote device is out of coverage. The transceiver unit (or the receiving unit) is configured to receive second configuration information from a network device. The second configuration information includes at least one parameter used to configure a first resource pool for the remote device, the at least one parameter includes a first parameter, and the first parameter is used by the remote device to perform sidelink power control based on a pathloss between the remote device and the network device. The transceiver unit (or a sending unit) is configured to: send first configuration information to the remote device, where the first configuration information includes another parameter other than the first parameter in the at least one parameter, or ignore the second configuration information.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the relay device according to any one of the first aspect to the eighth aspect.

According to a twelfth aspect, a communication apparatus is provided. The communication apparatus may be a remote device, or a chip or a chip system used in the remote device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the remote device in the foregoing aspects.

According to a thirteenth aspect, a communication apparatus is provided. The communication apparatus may be a network device, or a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the network device in the foregoing aspects.

According to a fourteenth aspect, a communication apparatus is provided. The communication apparatus may be a relay device, or a chip or a chip system used in the relay device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the relay device in the foregoing aspects.

According to a fifteenth aspect, a communication system is provided, including a remote device and a network device. The remote device is configured to perform the method performed by the remote device according to any one of the first aspect to the eighth aspect, and the network device is configured to perform the method performed by the network device according to any one of the first aspect to the eighth aspect. For example, the remote device may be implemented by using the communication apparatus according to the ninth aspect or the twelfth aspect, and the network device may be implemented by using the communication apparatus according to the tenth aspect or the thirteenth aspect.

According to a sixteenth aspect, another communication system is provided, including a remote device and a relay device. The remote device is configured to perform the method performed by the remote device according to any one of the first aspect to the eighth aspect, and the relay device is configured to perform the method performed by the relay device according to any one of the first aspect to the eighth aspect. For example, the remote device may be implemented by using the communication apparatus according to the ninth aspect or the twelfth aspect, and the relay device may be implemented by using the communication apparatus according to the eleventh aspect or the fourteenth aspect.

According to a seventeenth aspect, a computer-readable storage medium is provided. The computer-readable storage medium is configured to store a computer program or instructions. When the computer program or the instructions are run, the method performed by the remote device, the relay device, or the network device in the foregoing aspects is implemented.

According to an eighteenth aspect, a computer program product including instructions is provided. When the computer program product runs on a computer, the method in the foregoing aspects is implemented.

According to a nineteenth aspect, a chip system is provided, including a processor and an interface. The processor is configured to invoke instructions through the interface and run the instructions, to enable the chip system to implement the method in the foregoing aspects.

## BRIEF DESCRIPTION OF DRAWINGS

FIG. 1A and FIG. 1B are diagrams of two application scenarios according to embodiments of this application;
FIG. 2 is a flowchart of a first communication method according to an embodiment of this application;
FIG. 3A and FIG. 3B are each a diagrams of measurement configuration information according to an embodiment of this application;
FIG. 4 is a flowchart of a second communication method according to an embodiment of this application;
FIG. 5A and FIG. 5B are each another diagrams of measurement configuration information according to an embodiment of this application;
FIG. 6 is a diagram of another application scenario according to an embodiment of this application;
FIG. 7 to FIG. 9 are flowcharts of several communication methods according to embodiments of this application;
FIG. 10 is a diagram of an apparatus according to an embodiment of this application; and
FIG. 11 is a diagram of another apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, and are not used to limit sizes, content, sequences, time sequences, priorities, importance, or the like of the plurality of objects. In addition, step numbers in embodiments described in this application are merely intended to distinguish between different steps, but are not intended to limit a sequence of the steps. For example, S201 may be performed before S202, may be performed after S202, or may be performed simultaneously with S202.

The following describes some terms or concepts in embodiments of this application, to facilitate understanding of a person skilled in the art.

(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like. The terminal device may be widely used in various scenarios, for example, including but not limited to the following scenarios: cellular communication, device-to-device (device-to-device, D2D) communication, V2X, machine-to-machine/machine-type communication (machine-to-machine/machine-type communication, M2MMTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, a robot, and the like. The terminal device may sometimes be referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be mounted in the terminal device. In the technical solutions provided in embodiments of this application, the technical solutions provided in embodiments of this application are described by using an example in which the apparatus configured to implement the function of the terminal device is a terminal device.

For ease of description, an example in which the terminal device is a UE is used for description in embodiments of this application.

(2) A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequent evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a road side unit (road side unit, RSU). The following provides descriptions by using an example in which the access network device is a base station. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems using the different access technologies may be different. This is not limited in embodiments of this application. A 5th generation (5th generation, 5G) mobile communication system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be mounted in the network device. In the technical solutions provided in embodiments of this application, the technical solutions provided in embodiments of this application are described by using an example in which the apparatus configured to implement the function of the network device is a network device.

The following describes technical features in embodiments of this application.

In addition, to ensure service continuity of a remote UE, path switch of the remote UE between indirect paths is considered. In other words, the remote UE may switch from one indirect path to another indirect path. To perform path switch, the remote UE usually performs measurement before performing path switch based on a measurement result. Therefore, it is currently discussed whether a Z2 measurement event is supported, that is, a candidate relay UE becomes an offset better than a serving relay UE. That a candidate relay UE becomes an offset better than a serving relay UE may mean that SL channel quality of the candidate relay UE becomes an offset better than SL channel quality of the serving relay UE. A network device may configure a Z2 measurement event for the remote UE. The remote UE may measure SL channel quality of the candidate relay UE and serving relay UE on the indirect links based on the configuration of the network device, and report a measurement result to the network device when the Z2 measurement event is satisfied, so that the network device can determine whether the remote UE is to perform path switch.

The remote UE may measure SL-RSRP or SD-RSRP of a relay UE, which is used as a measurement result of the SL channel quality of the relay UE. The SL-RSRP is obtained by measuring SL unicast data, and the SD-RSRP is obtained by measuring a discovery message on an SL path. If there is an SL unicast connection between the remote UE and a to-be-measured relay UE, transmission of both SL unicast data and a discovery message can be performed between the two UEs. Therefore, the remote UE can measure SD-RSRP and/or SL-RSRP of the relay UE. If there is no SL unicast connection between the remote UE and the to-be-measured relay UE, transmission of the discovery message can be performed between the two UEs, but transmission of the SL unicast data cannot be performed between the two UEs. Therefore, the remote UE can measure the SD-RSRP of the relay UE, but cannot measure the SL-RSRP of the relay UE. It can be learned that there is an SL unicast connection between the remote UE and a serving relay UE of the remote UE. Therefore, the remote UE may measure SD-RSRP and/or SL-RSRP of the serving relay UE. There may be an SL unicast connection between the remote UE and a candidate (candidate) relay UE of the remote UE, or there may be no SL unicast connection between the remote UE and the candidate relay UE of the remote UE. Therefore, the remote UE can measure SD-RSRP and/or SL-RSRP of the candidate relay UE, or can measure the SD-RSRP of the candidate relay UE but cannot measure the SL-RSRP of the candidate relay UE. For example, the remote UE may determine whether the measurement result satisfies the Z2 event in the following several determining manners:

1. Compare the SL-RSRP of the serving relay UE with the SD-RSRP of the candidate relay UE, to determine whether the Z2 event is satisfied.
2. Compare the SD-RSRP of the serving relay UE with the SD-RSRP of the candidate relay UE, to determine whether the Z2 event is satisfied.
3. Compare the SL-RSRP of the serving relay UE with the SL-RSRP of the candidate relay UE, to determine whether the Z2 event is satisfied.
4. Compare the SD-RSRP of the serving relay UE with the SL-RSRP of the candidate relay UE, to determine whether the Z2 event is satisfied.

Currently, a power control mechanism is also used on the SL, and a transmit end UE may perform power control when sending SL unicast data. For example, power control on the SL may be performed according to the following relationship:

$$P_{\text{PSSCH}}(i) = min\left(P_{\text{CMAX}}, P_{\text{MAX,CBR}}, min\left(P_{\text{PSSCH},D}(i), P_{\text{PSSCH},SL}(i)\right)\right) \text{ [dBm] (Formula 1),}$$

where $P_{\text{PSSCH}}(i)$ represents transmit power of SL information, and the SL information is, for example, the SL unicast data. Because transmission of the SL unicast data may be performed through a physical sidelink shared channel (physical sidelink shared channel, PSSCH), the transmit power of the SL unicast data may be represented as $P_{\text{PSSCH}}(i)$. $P_{\text{CMAX}}$ represents configured maximum output power (configured maximum output power), for example, maximum output power configured for the transmit end UE. $P_{\text{MAX,CBR}}$ depends on a priority of the PSSCH (or the SL unicast data) and a channel busy ratio (channel busy ratio, CBR) range. min(x, y) represents a smaller value in x and y.

$P_{\text{PSSCH},D}(i)$ in Formula 1 is related to a downlink (downlink, DL) parameter dl-P0-PSSCH-physical sidelink control channel (physical sidelink control channel, PSCCH). For example, if the network device configures the dl-P0-PSSCH-PSCCH for the transmit end UE, $P_{\text{PSSCH},D}(i) = P_{\text{O},D} + 10\,log_{10}\left(2^{\mu} \cdot M_{\text{RB}}^{\text{PSSCH}}(i)\right) + \alpha_D \cdot PL_D$ [dBm]; or, if the network device does not configure the dl-P0-PSSCH-PSCCH for the transmit end UE, $P_{\text{PSSCH},D}(i) = min(P_{\text{CMAX}}, P_{\text{MAX,CBR}})$ [dBm].

$P_{\text{O},D}$ is a value provided by the dl-P0-PSSCH-PSCCH. $\alpha_D$ is provided by the dl-Alpha-PSSCH-PSCCH configured by the network device. If the network device configures no dl-Alpha-PSSCH-PSCCH or the configured dl-Alpha-PSSCH-PSCCH does not provide $\alpha_D$, $\alpha_D$ is 1. $M_{\text{RB}}^{\text{PSSCH}}(i)$ represents a quantity of resources for PSSCH transmission, and the resource is, for example, a resource block (resource block, RB). $\mu$ represents a subcarrier spacing configuration. $PL_D$ is related to a path loss (referred to as a pathloss below) on a Uu interface, that is, a path loss of communication between the UE and the network device. The pathloss on the Uu interface is mainly considered to avoid that when the UE is close to the network device, transmit power on an SL is excessively high, which interferes with related communication of the network device. Therefore, a smaller pathloss on the Uu interface indicates better channel quality of the Uu interface and lower transmit power on the SL.

$P_{\text{PSSCH},SL}(i)$ in Formula 1 is related to an SL parameter sl-P0-PSSCH-PSCCH. For example, if the network device configures the sl-P0-PSSCH-PSCCH for the transmit end UE, and a scheduling indication of the PSSCH (or the SL unicast data) carries a unicast indication or a format of the scheduling indication is a format (format) 2-C,

$$P_{\text{PSSCH},SL}(i) = P_{\text{O},SL} + 10\,log_{10}\left(2^{\mu} \cdot M_{\text{RB}}^{\text{PSSCH}}(i)\right) + \alpha_{SL} \cdot PL_{SL}$$ [dBm]; or, if the network device does not configure the sl-P0-PSSCH-PSCCH for the transmit end UE, and/or a scheduling indication of the PSSCH (or the SL unicast data) carries no unicast indication or a format of the scheduling indication is not a format 2-C, $P_{\text{PSSCH},SL}(i) = min(P_{\text{CMAX}}, P_{\text{PSSCH}, D}(i))$ [dBm]. If the scheduling indication of the PSSCH carries the unicast indication or the format of the scheduling indication is the format 2-C, it may indicate that the PSSCH is used for transmission of the SL unicast data.

$P_{\text{O},SL}$ represents a value provided by the sl-P0-PSSCH-PSCCH. $\alpha_{SL}$ is provided by the sl-Alpha-PSSCH-PSCCH configured by the network device. If the network device configures no sl-Alpha-PSSCH-PSCCH or the configured sl-Alpha-PSSCH-PSCCH does not provide $\alpha_{SL}$, $\alpha_{SL}$ is equal to 1. $M_{\text{RB}}^{\text{PSSCH}}(i)$ represents a quantity of resources for PSSCH transmission, and the resource is, for example, an RB. $\mu$ represents a subcarrier spacing configuration. $PL_{SL}$ is related to a pathloss on an SL interface, that is, a path loss of communication between the transmit end UE and the receive end UE. $PL_{SL}$ may be obtained by subtracting a result of measuring, by the transmit end UE, an SL signal from the receive end UE from reference signal power of the transmit end UE. Considering a pathloss between the transmit end UE and the receive end UE on a PC5 interface is mainly considering that if the two UEs are close to each other, transmit power on the SL may be reduced, so that communication quality can be ensured, and power consumption of the transmit end UE can also be reduced. Therefore, a smaller SL pathloss indicates better SL channel quality between the UEs and lower transmit power on the SL.

It can be learned from the foregoing descriptions that, for the communication between the remote UE and the relay UE on the SL, power control based on the SL pathloss applies to SL unicast data. In other words, a measurement result corresponding to SL-RSRP may be affected by the SL pathloss. However, power control based on the SL pathloss does not apply to the discovery message, that is, a measurement result corresponding to the SD-RSRP is not affected by the SL pathloss. Based on the foregoing descriptions, the remote UE may determine whether the measurement result satisfies the Z2 event in a plurality of determining manners. Two different types of measurement results: the SL-RSRP and the SD-RSRP, are used in the determining manner 1 and the determining manner 4 described above. In this case, although the measurement result obtained by the remote UE indicates that the measurement result of the candidate relay UE becomes an offset better than the measurement result of the serving relay UE, actual SL channel quality of the serving relay UE may also be good. Because power control is performed on the transmit power of the SL unicast data based on the SL pathloss, the SL-RSRP corresponding to the SL unicast data is lower. In this case, the network device decides, based on the measurement result, whether the remote UE is to perform path switch or relay UE reselection. The decision result may be inaccurate. Similarly, in network-controlled UE-to-UE relay communication, when the remote UE communicates with a UE via the relay UE, whether the remote UE needs to perform path switch to another candidate relay UE to communicate with the UE also has a similar problem.

Alternatively, in UE-to-UE relay communication decided by the remote UE, the remote UE may determine, in any one of the foregoing determining manners, whether the measurement result satisfies a path switch condition or a relay UE reselection condition. For example, the network device configures an offset for the remote UE, and the remote UE may compare the measurement result of the serving relay UE with the measurement result of the candidate relay UE based on the offset. However, the remote UE is not clear about whether the offset is applicable to the SD-RSRP or the SL-RSRP. Therefore, a comparison result obtained by the remote UE may be inaccurate. Therefore, the remote UE decides, based on the comparison result, whether the remote UE is to perform path switch or relay UE reselection, and a decision result may also be inaccurate.

It can be learned that currently, accuracy of a result of deciding whether the remote UE is to perform path switch by the network device or the remote UE is not high.

In view of this, in embodiments of this application, for a case in which the network device makes a decision, a measurement report sent by the remote UE to the network device may include first indication information, to indicate a measurement type corresponding to the measurement result. For example, whether the measurement result is SL-RSRP or SD-RSRP can be determined based on the first indication information. In this way, the network device can consider more factors when deciding whether the remote UE is to perform path switch, to improve decision accuracy of the network device. For a case in which the remote UE makes a decision, the remote UE is clear about a correspondence between a first offset and a measurement type, so that a decision result obtained by the remote UE on whether to perform path switch or relay UE reselection can be more accurate.

The technical solutions provided in embodiments of this application may be applied to a 4th generation mobile communication technology (4th generation, 4G) system, for example, a long term evolution (long term evolution, LTE) system, or may be applied to a 5th generation mobile communication technology (5th generation, 5G) system, for example, a new radio (new radio, NR) system, or may be applied to a next generation mobile communication system or another similar communication system, for example, a 6th generation mobile communication technology (6th generation, 6G) system. This is not specifically limited. The technical solutions provided in embodiments of this application may be applied to a device-to-device (device-to-device, D2D) scenario, for example, an NR-D2D scenario, or may be applied to avehicle-to-everything (vehicle-to-everything, V2X) scenario, for example, an NR-V2X scenario. For example, the technical solutions may be used in a field like intelligent driving, assisted driving, or an intelligent connected vehicle.

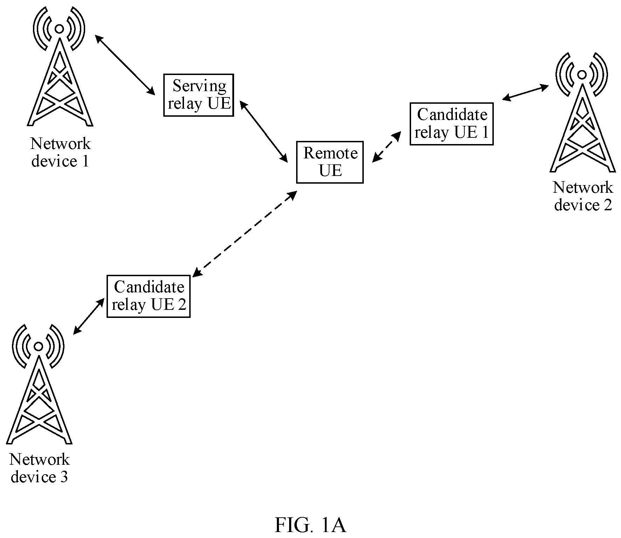

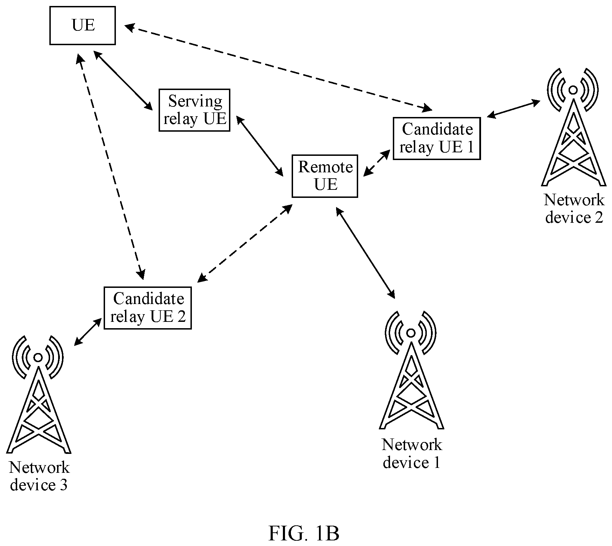

FIG. 1A and FIG. 1B are communication network architectures to which embodiments of this application are applicable. FIG. 1A includes a remote UE (a remote UE in FIG. 1A), a serving relay UE (a serving relay UE in FIG. 1A) of the remote UE, and candidate relay UEs (a candidate relay UE 1 and a candidate relay UE 2 in FIG. 1A) of the remote UE. In FIG. 1A, two candidate relay UEs are used as an example. Actually, there may be one or more candidate relay UEs of the remote UE. In addition, FIG. 1A further includes a network device (a network device 1 in FIG. 1A) serving the serving relay UE and network devices (a network device 2 and a network device 3 in FIG. 1A) respectively serving the two candidate relay UEs. The remote UE may communicate with or camp on the network device 1, the network device 2, or the network device 3 via different relay UEs.

FIG. 1B includes a remote UE (a remote UE in FIG. 1B), a serving relay UE (a serving relay UE in FIG. 1B) of the remote UE, and a UE that communicates with the remote UE via the serving relay UE, and further includes candidate relay UEs (a candidate relay UE 1 and a candidate relay UE 2 in FIG. 1B) of the remote UE. In FIG. 1B, the two candidate relay UEs are used as an example. Actually, there may be one or more candidate relay UEs of the remote UE. In addition, FIG. 1B further includes a network device (a network device 1 in FIG. 1B) serving the remote UE and network devices (a network device 2 and a network device 3 in FIG. 1B) respectively serving the two candidate relay UEs. The remote UE may communicate with the UE in FIG. 1B via the serving relay UE, the candidate relay UE 1, or the candidate relay UE 2. The network device 1, the network device 2, or the network device 3 may be a same network device or different network devices. For example, in FIG. 1B, the remote UE, the relay UEs, and the UE communicating with the remote UE are all within coverage of a network device. However, none of the remote UE, the relay UEs, and the UE communicating with the remote UE may be within an area covered by any network device, or only a part of the remote UE, the relay UEs, and the UE communicating with the remote UE are within the coverage of the network device. Whether the remote UE, the relay UEs, and the UE communicating with the remote UE are within the coverage of the network device is not limited.

FIG. 1A and FIG. 1B show examples in which the relay UE camps on different network devices. During actual application, the remote UE and the serving relay UE of the remote UE may camp on a same network device, or camp on different network devices. The remote UE and the candidate relay UE of the remote UE may camp on a same network device, or camp on different network devices. The serving relay UE of the remote UE and the candidate relay UE of the remote UE may camp on a same network device, or camp on different network devices. Different candidate relay UEs of the remote UE may camp on a same network device, or camp on different network devices. The network devices in FIG. 1A and FIG. 1B include, for example, an access network device and/or a core network device. Alternatively, FIG. 1B may not include any network device.

To better describe embodiments of this application, the following describes methods provided in embodiments of this application with reference to the accompanying drawings. Optionally, unless otherwise specified, steps represented by dashed lines in the accompanying drawings of the specification are all optional steps.

In descriptions of embodiments of this application, determining (or deciding) whether a remote UE is to perform path switch may be understood as determining (or deciding) whether the remote UE is to perform path switch or determining (or deciding) whether the remote UE is to perform relay UE reselection (for example, reselects a serving relay UE).

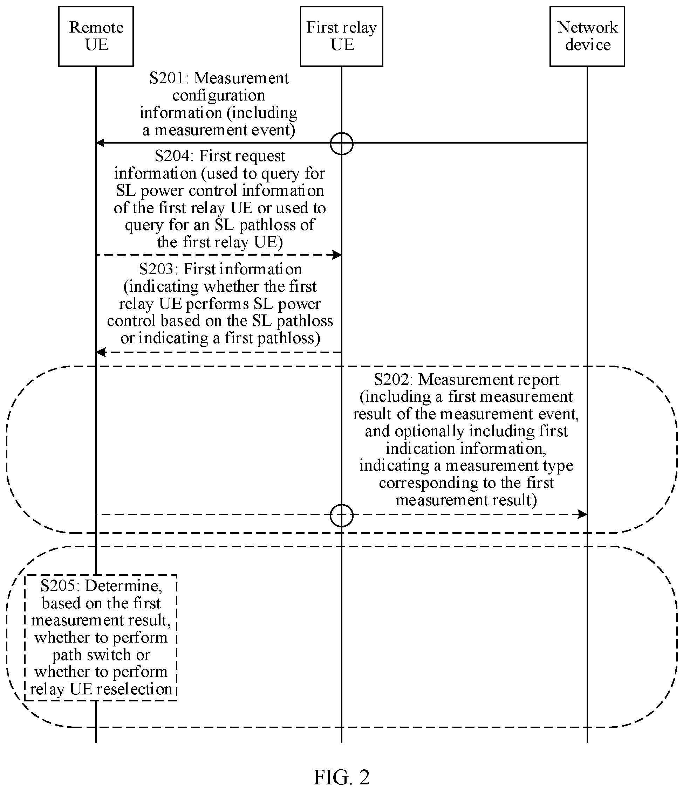

First, a first communication method according to an embodiment of this application is described. FIG. 2 is a flowchart of the method. The method may be applied to the network architecture shown in FIG. 1A or FIG. 1B. For example, a remote UE in the method may be the remote UE in FIG. 1A or FIG. 1B, a first relay UE in the method may be the serving relay UE in FIG. 1A or FIG. 1B, a second relay UE in the method may be the candidate relay UE 1 or the candidate relay UE 2 in FIG. 1A or FIG. 1B, and a network device in the method may be the network device 1 in FIG. 1A or FIG. 1B.

S201: The network device sends measurement configuration information. Correspondingly, the remote UE (represented as a remote UE in FIG. 2) receives the measurement configuration information from the network device. For example, in the architecture in FIG. 1A, the network device may send the measurement configuration information to the remote UE via the serving relay UE (for example, the first relay UE, which is represented as a first relay UE in FIG. 2) of the remote UE. Alternatively, in the architecture in FIG. 1B, the network device may directly send the measurement configuration information to the remote UE. Optionally, the network device may send the measurement configuration information to the remote UE through an RRC message, or may send the measurement configuration information to the remote UE through a system message (system information).

The measurement configuration information is used to configure measurement, and the measurement configuration may include a measurement reporting configuration. The measurement reporting configuration may include a measurement event, and the measurement event is, for example, a Z2 measurement event (event Z2). In embodiments of this application, the Z2 measurement event is an even that a candidate relay UE becomes an offset better than (or greater than) the serving relay UE (event Z2: candidate L2 U2N relay UE becomes an offset better than serving L2 U2N relay UE). In embodiments of this application, the offset in the Z2 measurement event is, for example, a first offset. In the Z2 measurement event, that the candidate relay UE becomes the first offset better than the serving relay UE may be understood as that signal quality of the candidate relay UE becomes the first offset better than signal quality of the serving relay UE. For example, the measurement configuration information includes a measurement identifier, for example, a measurement identity (ID). The measurement ID may be associated with the measurement reporting configuration, that is, associated with the measurement event. The measurement reporting configuration is used to configure a condition for the remote UE to send a measurement report corresponding to the measurement event to the network device and content of the measurement report. The measurement reporting configuration is, for example, report configuration NR (reportConfigNR).

Optionally, the measurement configuration information may include information about the offset used for the Z2 measurement event. Based on the configured Z2 measurement event, a manner in which the remote UE can compare a measurement result of the serving relay UE with a measurement result of the candidate relay UE (or a manner in which the remote UE measures the serving relay UE and the candidate relay UE) may include at least one of a measurement manner 1 to a measurement manner 4, and an offset for the at least one measurement manner may be included in the measurement reporting configuration.

The measurement manner 1 is measuring SL-RSRP of the serving relay UE and SL-RSRP of the candidate relay UE.

The measurement manner 2 is measuring SD-RSRP of the serving relay UE and SD-RSRP of the candidate relay UE.

The measurement manner 3 is measuring SL-RSRP of the serving relay UE and SD-RSRP of the candidate relay UE.

The measurement manner 4 is measuring SD-RSRP of the serving relay UE and SL-RSRP of the candidate relay UE.

An application scenario is considered. For example, the remote UE uses the measurement manner 3. To be specific, the remote UE measures the SL-RSRP of the serving relay UE, and measures the SD-RSRP of the candidate relay UE. If a distance between the serving relay UE and the remote UE is short, the serving relay UE uses low transmit power when sending SL unicast data because an SL pathloss between the serving relay UE and the remote UE is considered, so that a value of the SL-RSRP obtained by the remote UE by measuring the SL unicast data from the serving relay UE is small. However, the candidate relay UE does not consider an SL pathloss when sending a discovery message, and may use high transmit power. In this case, a value of the SD-RSRP obtained by the remote UE by measuring the discovery message from the candidate relay UE is large. In this case, the SD-RSRP may be greater than the SL-RSRP. Therefore, the remote UE compares the measured SL-RSRP with the measured SD-RSRP, and may draw a conclusion that a measurement result satisfies the Z2 measurement event. In this case, the remote UE may send a measurement report to the network device. If the network device makes a decision based on the measurement report, it is likely that the network device determines that the remote UE is to perform path switch, for example, is to switch from an indirect path between the remote UE and the serving relay UE to an indirect path between the remote UE and the candidate relay UE. However, in this case, SL channel quality of the serving relay UE may not be poor. Because the serving relay UE considers the SL pathloss when sending the SL unicast data, the value of the SL-RSRP measured by the remote UE is small. In other words, the network device has a decision result that is not necessarily accurate, and may determine that the remote UE is to perform path switch when the remote UE does not need to perform path switch.

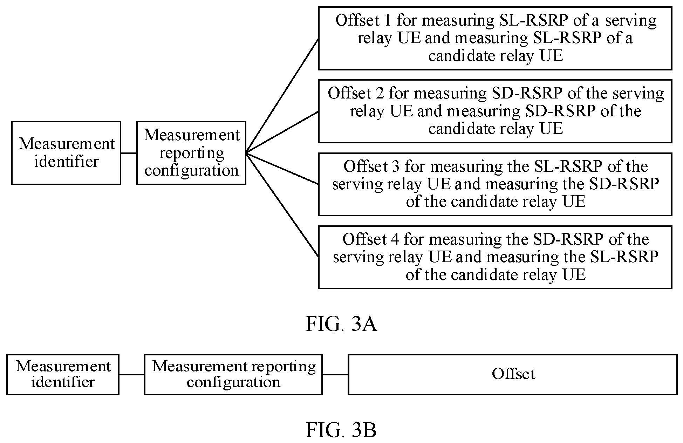

Therefore, optionally, the measurement configuration information may be used to separately configure a first offset for the at least one measurement manner. For example, at least one first offset may be configured in total, the first offset is in one-to-one correspondence with the measurement manner, and different measurement manners may be corresponding to different first offsets. Optionally, the measurement manner and the first offset may be configured together by using the measurement configuration information. For example, if a measurement manner is not configured, a first offset corresponding to the measurement manner does not need to be configured. The at least one first offset corresponding to the at least one measurement manner may be included in the measurement reporting configuration. If the remote UE uses a measurement manner, the remote UE may use a first offset corresponding to the measurement manner. For example, a first offset corresponding to the measurement manner 1 is offset1, a first offset corresponding to the measurement manner 2 is offset2, a first offset corresponding to the measurement manner 3 is offset3, and a first offset corresponding to the measurement manner 4 is offset4. The offset1, the offset2, the offset3, and the offset4 are different from each other. FIG. 3A is a diagram of configuring the offset1 to the offset4 by using the measurement configuration information. In FIG. 3A, the offset1 to the offset4 are respectively represented as an offset 1 to an offset 4. A first offset corresponding to a measurement manner may be configured on a basis that a measurement type corresponding to the measurement manner is considered. For example, for the measurement manner 3, if the scenario described in the previous paragraph is considered, the offset3 corresponding to the measurement manner 3 may be large, so that SL channel quality of the candidate relay UE is difficult to satisfy a condition that the SL channel quality becomes offset3 higher, to reduce a probability that the remote UE sends the measurement report to the network device when the SL channel quality of the serving relay UE is good, and reduce path switch processes of the remote UE.

Alternatively, a same measurement manner may be corresponding to a plurality of first offsets separately, and the remote UE determines a to-be-used first offset based on a configured condition. The measurement manner 3 is used as an example. The remote UE may determine, based on the SL channel quality of the current serving relay UE or the SL pathloss between the serving relay UE and the remote UE, a to-be-used first offset in the plurality of first offsets. For example, a threshold or a value range is provided, so that the remote UE determines the to-be-used first offset based on whether a threshold condition or a value range condition is satisfied. This solution is applicable to any one of the measurement manners 1 to 4. For example, for the measurement manner 3, a plurality of corresponding first offsets are respectively associated with SL channel quality ranges of the serving relay UE. For example, the offset1 in the plurality of first offsets is corresponding to that the SL-RSRP of the relay UE is greater than (greater than or equal to) a second threshold. The offset2 in the plurality of first offsets is corresponding to that the SL-RSRP of the relay UE is less than or equal to (less than) the second threshold. After receiving the configuration, the remote UE determines, based on an SL channel measurement result of the current serving relay UE, whether to use the offset1 or the offset2 in the Z2 event. For another example, for the measurement manner 3, a plurality of corresponding first offsets are respectively associated with SL pathloss ranges of the serving relay UE. For example, the offset1 in the plurality of first offsets is corresponding to that the SL-RSRP of the relay UE is greater than (greater than or equal to) a third threshold. The offset2 in the plurality of first offsets is corresponding to that the SL-RSRP of the relay UE is less than or equal to (less than) the third threshold. After receiving the configuration, the remote UE determines, based on an SL pathloss result between the remote UE and the current serving relay UE, whether to use the offset1 or the offset2 in the Z2 event. In this configuration manner, the remote UE can determine a determining condition for the Z2 measurement event based on a measurement status of the remote UE, to provide a more accurate result to the network device.

Alternatively, different measurement manners may be corresponding to a same first offset. For example, any plurality of the offset1, the offset2, the offset3, and the offset4 may be the same. For example, the offset1 is the same as the offset2, but is different from both the offset3 and the offset4; or the offset2, the offset3, and the offset4 are the same, but are different from the offset1; or the offset1, the offset2, the offset3, and the offset4 are all the same. Optionally, if the offset1 to the offset4 are all the same, the measurement configuration information may still be used to separately configure first offsets for the at least one measurement manner, but values of the configured first offsets are all the same. Alternatively, the measurement configuration information may be used to configure one first offset for the at least one measurement manner, and different measurement manners are all corresponding to the first offset, so that overheads of the measurement configuration information can be reduced. For example, an offset is configured by using the measurement configuration information, and the offset is applicable to each of the measurement manner 1 to the measurement manner 4. If the measurement configuration information is used to configure one first offset for the at least one measurement manner, the first offset may be configured provided that any measurement manner is configured by using the measurement configuration information. Alternatively, if the measurement configuration information is used to configure one first offset for the at least one measurement manner, the measurement configuration information may be used to configure the first offset instead of configuring the measurement manner. Regardless of a measurement manner used by the remote UE, the first offset may be used. FIG. 3B is a diagram of configuring one offset by using the measurement configuration information. In this configuration manner, a configuration process can be simplified, and a process in which the remote UE determines whether the Z2 measurement event is satisfied can also be simplified. When performing measurement based on the measurement ID included in the measurement configuration information, the remote UE may perform measurement based on a measurement object associated with the measurement ID, and evaluate, based on the measurement event in the measurement reporting configuration included in the measurement configuration information, whether to perform reporting. Optionally, that the measurement configuration information is used to configure the measurement manner or configure the first offset corresponding to the measurement manner cannot be understood as a limitation on a measurement process of the remote UE. For example, the measurement configuration information is used to configure first offsets corresponding to the measurement manner 1 and the measurement manner 2, and this does not mean that the remote UE needs to perform measurement in the measurement manner 1 and the measurement manner 2. A measurement manner used by the remote UE may be decided by the remote UE. For example, the remote UE may determine the measurement manner based on measurement information that can be currently obtained by the remote UE. However, if the measurement manner configured by using the measurement configuration information is used, whether a measurement reporting condition is satisfied may be determined based on the configuration (for example, the first offset) provided by using the measurement configuration information.

A measurement manner may be predefined in a protocol. For example, it may be predefined that only the SD-RSRP of the candidate relay UE is allowed to be used. In this case, measurement performed by the remote UE based on the measurement configuration information may be only the measurement manner 2 and/or the measurement manner 3. The measurement manner 1 and the measurement manner 4 are not used to compare results of the measurement event. Alternatively, it may be predefined in the protocol that only the SD-RSRP of the candidate relay UE is allowed to be used, and comparison is allowed to be performed only for measurement results of a same measurement type. This is equivalent to that the remote UE is allowed to measure only the SD-RSRP of the serving relay UE and the SD-RSRP of the candidate relay UE. In this case, only the measurement manner 2 may be used for measurement performed by the remote UE based on the measurement configuration information. The measurement manner 1, the measurement manner 3, and the measurement manner 4 are not used. The measurement result of the SD-RSRP of the serving relay UE is compared with the measurement result of the SD-RSRP of the candidate relay UE. Because neither of the two measurement results is affected by power control caused by the SL pathloss, the comparison is fair. When the serving relay UE sends no discovery message, the remote UE may trigger the serving relay UE to send a discovery message, for example, send the discovery message to the relay UE in a mode b, to trigger the relay UE to reply. The remote UE may determine, by performing comparison between source layer 2 (layer 2, L2) IDs of received discovery messages or source user information (User Info) carried in the discovery messages, which discovery message is from the serving relay UE, and measure the discovery message, to obtain the SD-RSRP of the serving relay UE. Alternatively, it may be predefined in the protocol that the SD-RSRP and the SL-RSRP of the candidate relay are allowed to be used. In this case, measurement performed by the remote UE based on the measurement configuration information may be any one or more of the measurement manner 1 to the measurement manner 4. Alternatively, it may be further predefined in the protocol that the SD-RSRP and the SL-RSRP of the candidate relay are allowed to be used, and comparison is allowed to be performed only for measurement results of a same measurement type. In this case, based on the measurement configuration information, the measurement manner 1 and/or the measurement manner 2 may be used, but the measurement manner 3 and the measurement manner 4 are not used. When the SD-RSRP of the serving relay UE or of the candidate relay UE needs to be measured or is requested to be measured, the remote UE may trigger the relay UE to send the discovery message. The remote UE may determine, by preforming comparison between source L2 IDs or source User Info carried in the discovery messages, a discovery message from the serving relay UE or from a target candidate relay UE, and measure the discovery message to obtain SD-RSRP of the relay UE (the serving relay UE or the target candidate relay UE).

Optionally, the measurement configuration information may be further used to configure one or more of the following: whether to report the measurement type corresponding to the measurement result of the measurement event, whether to report the SL pathloss, a first threshold, the second threshold, or the third threshold.

The measurement configuration information may be used to configure to report a measurement type corresponding to a measurement result of a triggered measurement event. In this case, when sending the measurement report to the network device, the remote UE may also send the measurement type corresponding to the measurement result of the triggered measurement event. Alternatively, the measurement configuration information may be used to configure not to report the measurement type corresponding to the measurement result of the triggered measurement event. In this case, the remote UE may not send the measurement type corresponding to the measurement result of the triggered measurement event. The measurement event is a measurement event configured through the measurement reporting configuration in the measurement configuration information, for example, the Z2 measurement event. For example, the measurement type may include SL-RSRP or SD-RSRP, or include an SL unicast data measurement result or a discovery message measurement result. For example, the measurement configuration information may be used to configure one or more of the following: to report whether the measurement result of the serving relay UE is SL-RSRP, to report whether the measurement result of the candidate relay UE is SL-RSRP, to report whether the measurement result of the serving relay UE is SL-RSRP or SD-RSRP, or to report whether the measurement result of the candidate relay UE is SL-RSRP or SD-RSRP.

Optionally, if it is predefined in the protocol that only the SD-RSRP of the candidate relay UE is allowed to be used, and comparison is allowed to be performed only for measurement results of a same measurement type, or the measurement configuration information is used to configure the measurement manner 2 but not to configure the measurement manner 1, the measurement manner 3, and the measurement manner 4, it indicates that the remote UE does not need to measure the SL-RSRP, and needs to measure only the SD-RSRP for comparison. In this case, the measurement configuration information does not need to be used to configure to report the measurement type corresponding to the measurement result of the triggered measurement event, or may be used to configure not to report the measurement type corresponding to the measurement result of the triggered measurement event. Alternatively, the measurement configuration information may not be used to configure whether to report the measurement type corresponding to the measurement result of the triggered measurement event. For example, a parameter indicating whether to report the measurement type corresponding to the measurement result of the triggered measurement event is not configured, and the remote UE does not need to send the measurement type corresponding to the measurement result.

If the measurement manner configured by using the measurement configuration information includes measuring the SL-RSRP (the SL-RSRP of the serving relay UE and/or the SL-RSRP of the candidate relay UE), for example, if the measurement configuration information is used to configure one or more of the measurement manner 1, the measurement manner 3, or the measurement manner 4, the measurement configuration information may be used to configure whether to report the measurement type corresponding to the measurement result of the triggered measurement event. Alternatively, even if the measurement configuration information is used to configure one or more of the measurement manner 1, the measurement manner 3, or the measurement manner 4, the measurement configuration information may not be used to configure whether to report the measurement type corresponding to the measurement result of the triggered measurement event, for example, not used to configure the parameter indicating whether to report the measurement type corresponding to the measurement result of the measurement event.

The measurement configuration information may be used to configure to report the SL pathloss, or not to report the SL pathloss. The SL pathloss may include an SL pathloss between the remote UE and the serving relay UE, and/or include an SL pathloss between the remote UE and the candidate relay UE. For example, the measurement configuration information may be used to configure, through a parameter, whether to report the SL pathloss. If the parameter indicates to report the SL pathloss, the remote UE may send the SL pathloss between the remote UE and the serving relay UE and/or the SL pathloss between the remote UE and the candidate relay UE to the network device. For another example, the measurement configuration information may be used to configure, through a parameter 1, whether to report the SL pathloss between the remote UE and the serving relay UE, and configure, through a parameter 2, whether to report the SL pathloss between the remote UE and the candidate relay UE. In this case, the network device may separately configure whether to report the two types of SL pathlosses. Alternatively, the remote UE may separately perform corresponding processing based on configured different parameters. Processing of whether to report different SL pathlosses does not interfere with each other.

For example, if a measurement manner that can be used based on the measurement configuration information relates to SL-RSRP measurement, for example, a measurement manner used for comparison in the Z2 measurement event includes any one or more of the measurement manner 1, the measurement manner 3, or the measurement manner 4, the measurement configuration information may be used to configure to report the SL pathloss. If the measurement manner that can be used based on the measurement configuration information does not relate to the SL-RSRP measurement, for example, the measurement manner used for comparison in the Z2 measurement event is the measurement manner 2, the measurement configuration information may be used to configure not to report the SL pathloss. In addition, if the measurement configuration information is used to configure, through the parameter 1, whether to report the SL pathloss between the remote UE and the serving relay UE, and configure, through the parameter 2, whether to report the SL pathloss between the remote UE and the candidate relay UE, and the measurement manner that can be used based on the measurement configuration information relates to SL-RSRP measurement of the serving relay UE, the measurement configuration information may be used to configure, through the parameter 1, to report the SL pathloss between the remote UE and the serving relay UE; and/or, if the measurement manner that can be used based on the measurement configuration information relates to SL-RSRP measurement of the candidate relay UE, the measurement configuration information may be used to configure, through the parameter 2, to report the SL pathloss between the remote UE and the candidate relay UE.

The first threshold may be used by the remote UE to determine an SL pathloss indicated by the measurement report. For example, an optional manner in which the remote UE sends the SL pathloss is that the remote UE sends a specific value of the SL pathloss. Alternatively, another optional manner in which the remote UE sends the SL pathloss is that the remote UE may send second indication information, and the second indication information may indicate a range to which the SL pathloss belongs or indicate whether a value of the SL pathloss is greater than (or greater than or equal to) the first threshold. For example, the remote UE may determine the specific value of the SL pathloss, and further determine the range to which the SL pathloss belongs, to indicate the range through the second indication information without needing to indicate the specific value of the SL pathloss. Alternatively, the remote UE may determine the specific value of the SL pathloss, then further determine whether the SL pathloss is greater than the first threshold (or whether the SL pathloss is greater than or equal to the first threshold), and indicate, through the second indication information, whether the SL pathloss is greater than the first threshold (or whether the SL pathloss is greater than or equal to the first threshold). This part is further described below.

The second threshold may be a threshold corresponding to the measurement result, for example, an RSRP threshold. For example, the second threshold is a threshold that is set for the measurement result of the serving relay UE of the remote UE. Based on the second threshold, the remote UE may determine whether to send the measurement report, or determine whether to trigger reporting of a configured measurement event (for example, the Z2 measurement event), or determine whether to measure the candidate relay UE, or determine to trigger an offset used in the configured measurement event. For example, if the measurement result obtained by the remote UE for the serving relay UE is less than the second threshold (or less than or equal to the second threshold), and the measurement result satisfies the measurement event (for example, the Z2 measurement event) configured by using the measurement configuration information, the remote UE may send the measurement report; or, if the measurement result obtained by the remote UE for the serving relay UE is greater than or equal to the second threshold (or greater than the second threshold), regardless of whether the measurement result satisfies the measurement event (for example, the Z2 measurement event) configured by using the measurement configuration information, the remote UE may not send the measurement report. For another example, the second threshold is a condition for the measurement event. If the measurement result obtained by the remote UE for the serving relay UE is less than the second threshold (or less than or equal to the second threshold), and the measurement result satisfies the measurement event (for example, the Z2 measurement event) configured by using the measurement configuration information, the remote UE may send the measurement report; or, if the measurement result obtained by the remote UE for the serving relay UE is greater than or equal to the second threshold (or greater than the second threshold), regardless of whether the measurement result satisfies the measurement event (for example, the Z2 measurement event) configured by using the measurement configuration information, the remote UE may not trigger measurement reporting, that is, does not send the measurement report due to the measurement event. For another example, if the measurement result obtained by the remote UE for the serving relay UE is less than the second threshold (or less than or equal to the second threshold), the remote UE may measure the candidate relay UE of the remote UE, to determine whether the measurement event (for example, the Z2 measurement event) configured by using the measurement configuration information is satisfied; or, if the measurement result obtained by the remote UE for the serving relay UE is greater than or equal to the second threshold (or greater than the second threshold), even if measurement performed on the candidate relay UE is configured, the remote UE may not measure the candidate relay UE, and therefore does not trigger the measurement report either. For another example, a measurement event configuration received by the remote UE includes the at least one first offset (for example, the offset1 and the offset2). If the measurement result obtained by the remote UE for the serving relay UE is less than the second threshold (or less than or equal to the second threshold), it is determined that the offset1 is used as an offset condition for the configured measurement event measurement (for example, the Z2 measurement event). If the measurement result obtained by the remote UE for the serving relay UE is greater than the second threshold (or greater than or equal to the second threshold), it is determined that the offset2 is used as the offset condition for the configured measurement event measurement (for example, the Z2 measurement event). When the measurement result satisfies the measurement event, the remote UE may send the measurement report; or when the measurement result does not satisfy the measurement event, the remote UE may not send the measurement report.

The third threshold may be a threshold corresponding to the SL pathloss. For example, the third threshold is a threshold set for the SL pathloss between the remote UE and the serving relay UE. Based on the third threshold, the remote UE may determine whether to send the measurement report, or determine whether to trigger reporting of the configured measurement event (for example, the Z2 measurement event), or determine whether to measure the candidate relay UE, or determine to trigger an offset used in the configured measurement event. For example, if the SL pathloss between the remote UE and the serving relay UE is greater than the third threshold (or greater than or equal to the third threshold), and the measurement result satisfies the measurement event (for example, the Z2 measurement event) configured by using the measurement configuration information, the remote UE may send the measurement report. Or, if the SL pathloss between the remote UE and the serving relay UE is less than or equal to the third threshold (or less than the third threshold), regardless of whether the measurement result satisfies the measurement event (for example, the Z2 measurement event) configured by using the measurement configuration information, the remote UE may not send the measurement report. For another example, if the SL pathloss between the remote UE and the serving relay UE is greater than the third threshold (or greater than or equal to the third threshold), and the measurement result satisfies the measurement event (for example, the Z2 measurement event) configured by using the measurement configuration information, the remote UE may send the measurement report. Or, if the SL pathloss between the remote UE and the serving relay UE is less than or equal to the third threshold (or less than the third threshold), regardless of whether the measurement result satisfies the measurement event (for example, the Z2 measurement event) configured by using the measurement configuration information, the remote UE may not trigger measurement reporting, that is, does not send the measurement report due to the measurement event. Alternatively, it may be considered that when the SL pathloss between the remote UE and the serving relay UE is less than or equal to the third threshold (or less than the third threshold), the configured measurement event (for example, the Z2 measurement event) is always not satisfied. Therefore, measurement reporting is not triggered due to the measurement event. For another example, if the SL pathloss between the remote UE and the serving relay UE is less than the third threshold (or less than or equal to the third threshold), the remote UE may measure the candidate relay UE of the remote UE, to determine whether the measurement event (for example, the Z2 measurement event) configured by using the measurement configuration information is satisfied. Or, if the SL pathloss between the remote UE and the serving relay UE is greater than or equal to the third threshold (or greater than the third threshold), the remote UE may not measure the candidate relay UE, and therefore does not trigger the measurement report either. For another example, the measurement event configuration received by the remote UE includes the at least one first offset (for example, the offset1 and the offset2). If the SL pathloss between the remote UE and the serving relay UE is less than the third threshold (or less than or equal to the third threshold), it is determined that the offset1 is used as an offset condition for the configured measurement event measurement (for example, the Z2 measurement event). If the SL pathloss between the remote UE and the serving relay UE is greater than the third threshold (or greater than or equal to the third threshold), it is determined that the offset2 is used as an offset condition for the configured measurement event measurement (for example, the Z2 measurement event). When the measurement result obtained by the remote UE satisfies the measurement event, the remote UE may send the measurement report; or when the measurement result obtained by the remote UE does not satisfy the measurement event the remote UE may not send the measurement report.

The measurement configuration information may be used to configure the second threshold and/or the third threshold. If both the second threshold and the third threshold are configured, the two thresholds may be used in combination. For example, if the SL pathloss between the remote UE and the serving relay UE is greater than the third threshold (or greater than or equal to the third threshold), the measurement result obtained by the remote UE for the serving relay UE is less than the second threshold (or less than or equal to the second threshold), and the measurement result satisfies the measurement event (for example, the Z2 measurement event) configured by using the measurement configuration information, the remote UE may send the measurement report. Or, if the SL pathloss between the remote UE and the serving relay UE is less than or equal to the third threshold (or less than the third threshold), and/or the measurement result obtained by the remote UE for the serving relay UE is greater than the second threshold (or greater than or equal to the second threshold), regardless of whether the measurement result satisfies the measurement event (for example, the Z2 measurement event) configured by using the measurement configuration information, the remote UE may not send the measurement report. For another example, if the SL pathloss between the remote UE and the serving relay UE is greater than the third threshold (or greater than or equal to the third threshold), and the measurement result obtained by the remote UE for the serving relay UE is less than the second threshold (or less than or equal to the second threshold), the remote UE may measure the candidate relay UE of the remote UE, to determine whether the measurement event (for example, the Z2 measurement event) configured by using the measurement configuration information is satisfied. Or, if the SL pathloss between the remote UE and the serving relay UE is less than or equal to the third threshold (or less than the third threshold), and/or the measurement result obtained by the remote UE for the serving relay UE is greater than the second threshold (or greater than or equal to the second threshold), the remote UE may not measure the candidate relay UE, and therefore does not trigger the measurement report either.

By using the second threshold and/or the third threshold, processes in which the remote UE reports the measurement report can be reduced, thereby reducing unnecessary path switch processes performed by the remote UE. For example, if the measurement result of the serving relay UE is greater than (or greater than or equal to) the second threshold, it indicates that the SL channel quality of the serving relay UE is good. In this case, the remote UE may not need to perform path switch. Therefore, the remote UE may not send the measurement report, and the network device does not decide whether the remote UE is to perform path switch either. For another example, if the measurement result of the serving relay UE is greater than (or greater than or equal to) the second threshold, it indicates that the SL channel quality of the serving relay UE is good. In this case, the remote UE may not need to perform path switch. Therefore, a first offset associated with the configured measurement event (for example, the Z2 measurement event) in this case is large. In this way, the remote UE determines that the large offset is used, and the measurement event is not easily satisfied. Therefore, the remote UE may not send the measurement report, and the network device does not decide whether the remote UE is to perform path switch. For another example, if the SL pathloss between the remote UE and the serving relay UE is less than (or less than or equal to) the third threshold, it indicates that the distance between the serving relay UE and the remote UE is short. Because the distance is short, the SL channel quality of the serving relay UE may also be good. Therefore, the remote UE may not need to perform path switch. In this case, the remote UE may not send the measurement report, and the network device does not decide whether the remote UE is to perform path switch. For another example, if the SL pathloss between the remote UE and the serving relay UE is less than (or less than or equal to) the third threshold, it indicates that the SL channel quality of the serving relay UE is good. In this case, the remote UE may not need to perform path switch. Therefore, the first offset associated with the configured measurement event (for example, the Z2 measurement event) in this case is large. In this way, the remote UE determines that the large offset is used, and the measurement event is not easily satisfied. Therefore, the remote UE may not send the measurement report, and the network device does not decide whether the remote UE is to perform path switch.

Alternatively, one or more of the first threshold, the second threshold, or the third threshold may not be configured by using the measurement configuration information, for example, may be predefined in the protocol, or may be preconfigured in the UE, or may be configured by a higher layer (for example, a radio resource control (radio resource control, RRC) layer) of the UE.

Optionally, the method further includes S202: The remote UE sends the measurement report to the network device. Correspondingly, the network device receives the measurement report from the remote UE. For example, the remote UE may send the measurement report to the network device via the first relay UE. The measurement report may include a first measurement result. The first measurement result is a result obtained by the remote UE by performing measurement based on the measurement configuration information from the network device, or the first measurement result is a result obtained by the remote UE by performing measurement based on the measurement event configured by using the measurement configuration information from the network device. For another example, in the architecture in FIG. 1B, the remote UE may directly send the measurement report to the network device.

The remote UE may perform measurement based on the measurement configuration information. If neither the second threshold nor the third threshold is configured by using the measurement configuration information (or the second threshold and/or the third threshold are/is not defined in the protocol), the remote UE may send the measurement report to the network device when the measurement result satisfies the measurement event configured by using the measurement configuration information; or if the second threshold and/or the third threshold are/is configured by using the measurement configuration information (or the second threshold and/or the third threshold are/is predefined in the protocol), the remote UE may send the measurement report to the network device when the second threshold and/or the third threshold are/is satisfied and the measurement result satisfies the measurement event configured by using the measurement configuration information. Alternatively, if the second threshold and/or the third threshold are/is configured by using the measurement configuration information (or the second threshold and/or the third threshold are/is predefined in the protocol), an offset parameter of the measurement event may be determined based on the second threshold and/or the third threshold, to determine the measurement event. How to satisfy the second threshold and the third threshold is described in S201.

Optionally, the measurement report may further include first indication information, and the first indication information may indicate a measurement type corresponding to the first measurement result. The first indication information may be included in the first measurement result, or may not be included in the first measurement result. As described in S201, the network device may configure, by using the measurement configuration information, whether to report the measurement type corresponding to the measurement result of the measurement event. If the measurement configuration information is used to configure to report the measurement type corresponding to the measurement result of the triggered measurement event, the measurement report may include first indication information. If the measurement configuration information is used to configure not to report the measurement type corresponding to the measurement result of the triggered measurement event, the measurement report may not include the first indication information. Alternatively, it is possible that the measurement configuration information is not used to configure whether to report the measurement type corresponding to the measurement result of the measurement event. For example, the measurement configuration information does not include a parameter used to configure whether to report the measurement type corresponding to the measurement result of the triggered measurement event. In this case, the remote UE may also send the first indication information. For example, the measurement report includes the first indication information. Alternatively, the remote UE may not send the first indication information in this case. For example, the measurement report does not include the first indication information. Alternatively, it is possible that if the measurement configuration information includes the first threshold and/or the second threshold and/or the third threshold, when reporting is performed after the threshold is satisfied, the measurement report may include the first indication information.

The first indication information indicates the measurement type corresponding to the first measurement result, or the first indication information indicates the measurement type corresponding to the first measurement result used in the triggered measurement event. Optionally, the measurement type corresponding to the first measurement result may include one or more of the following: The measurement result of the first relay UE is SL-RSRP, the measurement result of the first relay UE is SD-RSRP, the measurement result of the second relay UE is SL-RSRP, the measurement result of the second relay UE is SD-RSRP, whether the measurement result of the first relay UE is SL-RSRP, or whether the measurement result of the second relay UE is SL-RSRP. The first relay UE is a serving relay UE of the remote UE, and the second relay UE is a candidate relay UE of the remote UE. There may be a plurality of candidate relay UEs of the remote UE. In this case, the first indication information may indicate measurement types of measurement results of these candidate relay UEs. In this specification, the second relay UE is used as an example, and the second relay UE is, for example, any one of the candidate relay UEs.

For example, it is predefined in the protocol that the SD-RSRP and the SL-RSRP of the candidate relay are allowed to be used. Based on the measurement configuration information, any one or more of the measurement manner 1 to the measurement manner 4 may be used to determine whether the configured measurement event is satisfied. For example, the foregoing four measurement manners may be used based on the measurement configuration information. Comparison is allowed to be performed for a plurality of types of quantities, and configuration is flexible, so that the remote UE can obtain the measurement result more easily. Alternatively, it is predefined in the protocol that the SD-RSRP and the SL-RSRP of the candidate relay are allowed to be used, and comparison is allowed to be performed only for measurement results of a same measurement type. Based on the measurement configuration information, the measurement manner 1 and/or the measurement manner 2 may be used, but the measurement manner 3 and the measurement manner 4 cannot be used, for comparison in the configured measurement event. Comparison is performed between the measurement results of a same type of the serving relay UE and the candidate relay UE. Because neither of the two measurement results is affected by power control caused by the SL pathloss or both the measurement results are affected by the power control caused by the SL pathloss, the comparison is fair. When the serving relay UE or the candidate relay UE sends no discovery message but the SD-RSRP needs to be measured, the remote UE may trigger the relay UE to send the discovery message, for example, send the discovery message to the relay UE in the mode b, to trigger the relay UE to reply. The remote UE may determine, by preforming comparison between source L2 IDs or source User Info carried in the discovery messages, a discovery message from the relay UE (the serving relay UE or the candidate relay UE), and measure the discovery message, to obtain the SD-RSRP of the relay UE (the serving relay UE or the candidate relay UE). The measurement configuration information is used to configure whether to report the measurement type corresponding to the measurement result of the triggered measurement event. After triggering, the remote UE reports the measurement type corresponding to the measurement result of the triggered measurement event. For example, in a reporting manner, the measurement configuration information is used to configure to report whether the measurement result of the serving relay UE is SL-RSRP, and/or report whether the measurement result of the candidate relay UE is SL-RSRP. In this case, the first indication information may indicate whether the measurement result of the first relay UE is the SL-RSRP, and/or whether the measurement result of the second relay UE is the SL-RSRP. For another example, the measurement configuration information is used to configure whether to report the measurement type corresponding to the measurement result of the triggered measurement event. In another configuration manner, the measurement configuration information is used to configure to report whether the measurement result of the serving relay UE is SL-RSRP or SD-RSRP, and/or whether the measurement result of the candidate relay UE is SL-RSRP or SD-RSRP. In this case, the first indication information may indicate one or more of the following: the measurement result of the first relay UE is the SL-RSRP, the measurement result of the first relay UE is the SD-RSRP, the measurement result of the second relay UE is the SL-RSRP, or the measurement result of the second relay UE is the SD-RSRP. For another example, when comparison is allowed to be performed only for measurement results of a same measurement type, the remote UE may report whether a used measurement manner is SL-RSRP or SD-RSRP. To be specific, the first indication information may indicate whether a type of a measurement result used in a currently triggered measurement event is the SL-RSRP or the SD-RSRP. Because comparison is allowed to be performed only for results of a same measurement type, a measurement type reported by the remote UE may be of the serving relay UE, or may be of the candidate relay UE.

Alternatively, it is predefined in the protocol that only the SD-RSRP of the candidate relay UE is allowed to be used. Based on the measurement configuration information, the measurement manner 2 and/or measurement manner 3, instead of the measurement manner 1 and the measurement manner 4, may be used to trigger the measurement event. The measurement configuration information is used to configure whether to report the measurement type corresponding to the measurement result of the measurement event. For example, in a reporting manner, the measurement configuration information is used to configure to report whether the measurement result of the serving relay UE is SL-RSRP. In this case, the first indication information may indicate whether the measurement result of the first relay UE is the SL-RSRP. For another example, the measurement is used to configure whether to report the measurement type corresponding to the measurement result of the measurement event. In another configuration manner, the measurement configuration information is used to configure to report whether the measurement result of the serving relay UE is SL-RSRP or SD-RSRP. In this case, the first indication information may indicate that the measurement result of the first relay UE is the SL-RSRP or the SD-RSRP.

However, if it is predefined in the protocol that only the SD-RSRP of the candidate relay UE is allowed to be used, and comparison is allowed to be performed only for measurement results of a same measurement type, based on the measurement configuration information, the measurement manner 2 may be used, but the measurement manner 1, the measurement manner 3, and the measurement manner 4 are not used. In this case, the measurement configuration information may be used to configure not to report the measurement type corresponding to the measurement result of the measurement event, or the measurement configuration information may not be used to configure whether to report the measurement type corresponding to the measurement result of the measurement event. When the configured measurement event triggers measurement reporting, the network device may learn that the SD-RSRP of the serving relay UE and the SD-RSRP of the candidate relay UE are used for comparison, and reporting is triggered.

Optionally, the measurement report may indicate a first pathloss and/or a second pathloss. The first pathloss is an SL pathloss between the remote UE and the first relay UE, and the second pathloss is an SL pathloss between the remote UE and the second relay UE. For example, if the measurement configuration information is used to configure to report the SL pathloss, the measurement report may indicate the first pathloss if the first measurement result relates to the SL-RSRP of the serving relay UE; and the measurement report may indicate the second pathloss if the first measurement result relates to the SL-RSRP of the candidate relay UE. For another example, if the measurement configuration information is used to configure, through the parameter 1, to report the SL pathloss between the remote UE and the serving relay UE, the measurement report may indicate the first pathloss; and if the measurement configuration information is used to configure, through the parameter 2, to report the SL pathloss between the remote UE and the candidate relay UE, the measurement report may indicate the second pathloss. For still another example, the measurement configuration information is not used to configure whether to report the SL pathloss. For example, the measurement configuration information does not include the parameter indicating whether to report the SL pathloss. Optionally, if the first measurement result relates to the SL-RSRP, the remote UE may alternatively report the SL pathloss by itself.

The measurement report indicates the first pathloss and/or the second pathloss. For example, in an indication manner, the measurement report may further indicate the first pathloss and/or the second pathloss. This is understood as that, in addition to including the first measurement result, the measurement report may further indicate the first pathloss and/or the second pathloss. In other words, the first measurement result does not indicate the first pathloss and/or the second pathloss. Alternatively, another manner of indicating the first pathloss and/or the second pathloss by the measurement report is that the first measurement result indicates the first pathloss and/or the second pathloss.

The measurement report or the first measurement result indicates the first pathloss. For example, in an indication manner, the measurement report or the first measurement result includes a value of the first pathloss.

Alternatively, another indication manner of indicating the first pathloss by the measurement report or the first measurement result is that the measurement report or the first measurement result includes second indication information, and the second indication information may indicate a range to which the value of the first pathloss belongs, or indicate whether the value of the first pathloss is greater than the first threshold. The range to which the value of the pathloss belongs may be predefined in the protocol, or may be configured by using the measurement configuration information in S201. For example, it is specified that if the first pathloss is less than (or less than or equal to) a first value, the range to which the first pathloss belongs is "small"; if the first pathloss is greater than (or greater than or equal to) the first value and less than (or less than or equal to) a second value, the range to which the first pathloss belongs is "medium"; and if the first pathloss is greater than (or greater than or equal to) the second value, the range to which the first pathloss belongs is "large". For example, the first value is 10 dB, and the second value is 30 dB. In the foregoing example, a same determining threshold is used for different ranges. For example, the first value is used as both an upper limit of the "small" range and a lower limit of the "medium" range. Alternatively, different determining thresholds may be used for the different ranges. For example, if the first pathloss is less than (or less than or equal to) a first value, the range to which the first pathloss belongs is "small"; if the first pathloss is greater than (or greater than or equal to) a second value and less than (or less than or equal to) a third value, the range to which the first pathloss belongs is "medium"; and if the first pathloss is greater than (or greater than or equal to) a fourth value, the range to which the first pathloss belongs is "large". The first value may be different from the second value, and/or the third value may be different from the fourth value.

For another example, if the first pathloss is less than (or less than or equal to) a third value, the range to which the first pathloss belongs is "near"; and if the first pathloss is greater than (or greater than or equal to) the third value, the range to which the first pathloss belongs is "far". The third value is, for example, 20 dB. Similarly, in the foregoing example, a same determining threshold is used for different ranges. For example, the third value is used as both an upper limit of the "near" range and a lower limit of the "far" range. Alternatively, different determining thresholds may be used for the different ranges. For another example, if the first pathloss is less than (or less than or equal to) a third value, the range to which the first pathloss belongs is "near"; and if the first pathloss is greater than (or greater than or equal to) a fourth value, the range to which the first pathloss belongs is "far". The third value may be different from the fourth value.

For another example, if the first pathloss is less than or equal to the first threshold, the second indication information may indicate that the first pathloss is not greater than the first threshold; and if the first pathloss is greater than the second threshold, the second indication information may indicate that the first pathloss is greater than the second threshold. The first threshold is the same as or different from the second threshold. For example, the second indication information occupies 1 bit. If a value of the bit is "0", it indicates that the first pathloss is not greater than the first threshold. If the value of the bit is "1", it indicates that the first pathloss is greater than the second threshold.

For another example, the second indication information indicates only that the first pathloss is greater than (or greater than or equal to) a threshold (for example, the first threshold). To be specific, when the measurement report includes the second indication information, it indicates that the first pathloss is greater than (or greater than or equal to) the first threshold. The measurement report includes the second indication information only when a threshold condition is satisfied. The measurement report does not include the second indication information when the threshold condition is not satisfied.

A manner of indicating the second pathloss by the measurement report or the first measurement result is similar to a manner of indicating the first pathloss. Details are not described. The manner of indicating the first pathloss by the measurement report or the first measurement result may be the same as the manner of indicating the second pathloss. For example, specific values are included in both. Alternatively, the two indication manners may be different. For example, the measurement report or the first measurement result includes the value of the first pathloss and the second indication information, and the second indication information may indicate a range to which a value of the second pathloss belongs.

If the measurement report indicates the SL pathloss, the remote UE may first obtain the SL pathloss. A manner in which the remote UE obtains the first pathloss is that the remote UE calculates the first pathloss. For example, the remote UE may send an SL signal to the first relay UE, and indicate the first relay UE to return a measurement result of the SL signal to the remote UE. After receiving the measurement result, the remote UE may obtain a first pathloss based on transmit power of the SL signal and the measurement result. For example, the first pathloss is a difference obtained by subtracting the measurement result from the transmit power of the SL signal.

Alternatively, another manner in which the remote UE obtains the first pathloss is that the remote UE receives the first pathloss from the first relay UE. For example, the first relay UE may send first information to the remote UE. Refer to S203. The first information may indicate whether the first relay UE is to perform SL power control based on the SL pathloss, and/or indicate the first pathloss. When sending the first information to the remote UE, the first relay UE may have performed SL power control based on the SL pathloss; or has not performed SL power control based on the SL pathloss, and performs SL power control based on the SL pathloss if sending the SL unicast data; or may be performing SL power control based on the SL pathloss. Optionally, refer to S204. The remote UE may first send first request information to the first relay UE. The first information may be sent in response to the first request information. Alternatively, the first information may be sent periodically. Alternatively, the first information may be sent when an SL power control status of the first relay UE changes. For example, if a distance between the first relay UE and the remote UE gradually increases, even if the first relay UE performs SL power control on transmit power of the SL unicast data based on the SL pathloss, the transmit power of the SL unicast data may be high. In this case, the SL-RSRP of the first relay UE measured by the remote UE may be consistent with the measured SD-RSRP of the second relay UE. It can be learned from Formula 1 that, in this case, the SL pathloss is no longer a reason why the transmit power of the SL unicast data is limited. In this case, the first relay UE may send the first information to the remote UE.

The first request information may be used to query for SL power control information of the first relay UE (for example, query whether the first relay UE is to perform SL power control based on the SL pathloss, or query whether an SL pathloss of the first relay UE acts on the transmit power of the SL unicast data), or query for the SL pathloss of the first relay UE. The SL pathloss of the first relay UE is an SL pathloss between the first relay UE and the remote UE. After receiving the first request information, the first relay UE may send the first information to the remote UE. The first information may indicate whether the first relay UE is to perform SL power control based on the SL pathloss, or indicate the first pathloss. For example, if the first request information is used to query for the SL power control information of the first relay UE, the first information may indicate the first relay UE to perform SL power control based on the SL pathloss or not to perform SL power control based on the SL pathloss. Alternatively, if the first request information is used to query for the SL pathloss of the first relay UE, the first information may indicate the first pathloss. A manner of indicating the first pathloss by the first information may be similar to the foregoing manner of indicating the first pathloss by the measurement report or the first measurement result. Details are not described.

A manner in which the remote UE obtains the second pathloss may be similar to the manner in which the remote UE obtains the first pathloss. Details are not described.

For example, if the first measurement result indicates that SL channel quality of the first relay UE becomes a first offset higher than SL channel quality of the second relay UE, and the measurement report further includes the first indication information, indicating that the SL-RSRP of the first relay UE is measured, and the SD-RSRP of the second relay UE is measured. In this case, optionally, the network device may indicate the remote UE to report the measurement result of the first relay UE. After receiving the measurement result of the first relay UE, the network device may determine whether the remote UE is to perform path switch. For example, if the measurement result of the first relay UE is greater than (or greater than or equal to) a fourth threshold, it indicates that the SL channel quality between the first relay UE and the remote UE is good. In this case, the network device may determine that the remote UE is not to perform path switch. If the measurement result of the first relay UE is less than or equal to (or less than) the fourth threshold, the network device may determine that the remote UE is to perform path switch.

For another example, if the first measurement result indicates that the SL channel quality of the first relay UE becomes the first offset higher than the SL channel quality of the second relay UE, the measurement report includes the first indication information, indicating that the SL-RSRP of the first relay UE is measured, and the SD-RSRP of the second relay UE is measured, and the measurement report further indicates the first pathloss. In this case, a determining result of the network device may be that if the first pathloss is less than (or less than or equal to) a fifth threshold, it indicates that the distance between the first relay UE and the remote UE is short. In this case, the SL channel quality between the first relay UE and the remote UE may be good, and the network device may determine that the remote UE is not to perform path switch. If the first pathloss is greater than or equal to (or greater than) the fifth threshold, it indicates that the distance between the first relay UE and the remote UE is long, and the network device may determine that the remote UE is to perform path switch.

Alternatively, for a case in which the remote UE determines whether to perform path switch or whether to perform relay UE reselection, S202 may not be performed. For example, in this case, the method may further include S205: The remote UE determines, based on the first measurement result, whether to perform path switch or whether to perform relay UE reselection.

In this case, information such as the measurement configuration information and a threshold (for example, one or more of the first threshold, the second threshold, or the third threshold) may be preconfigured, or may be delivered by the network device. If the measurement configuration information is determined through preconfiguration, the method may not include S201. The remote UE may perform measurement and measurement comparison based on the configured information, but does not need to report the measurement report to the network. Instead, the remote UE performs determining by itself, to determine whether to perform relay UE reselection. Optionally, in this case, the measurement configuration information may not include the measurement identifier or the measurement reporting configuration, for example, may include the first offset, and optionally include a measurement manner (or include a correspondence between the measurement manner and the first offset) and/or a threshold (for example, one or more of the first threshold, the second threshold, or the third threshold).

In this embodiment of this application, for the case in which the network device determines whether the remote UE is to perform path switch or relay UE reselection, the network device can learn of a specific status on a current SL through reporting by the remote UE, so that the network device can obtain more information to determine whether the remote UE is to perform path switch or relay UE reselection. This reduces a probability that the network device improperly or incorrectly determines whether the remote UE is to perform path switch or relay UE reselection.

For the case in which the remote UE determines whether to perform path switch or relay UE reselection, the remote UE is clear about the correspondence between the first offset and the measurement manner, and therefore can determine a measurement type corresponding to the first offset, so that a decision result obtained by the remote UE on whether to perform path switch or relay UE reselection can be more accurate. Optionally, the remote UE may further determine a corresponding threshold, so that the remote UE can determine, in a more proper case, whether to perform path switch or relay UE reselection. This further improves the decision accuracy of the remote UE.

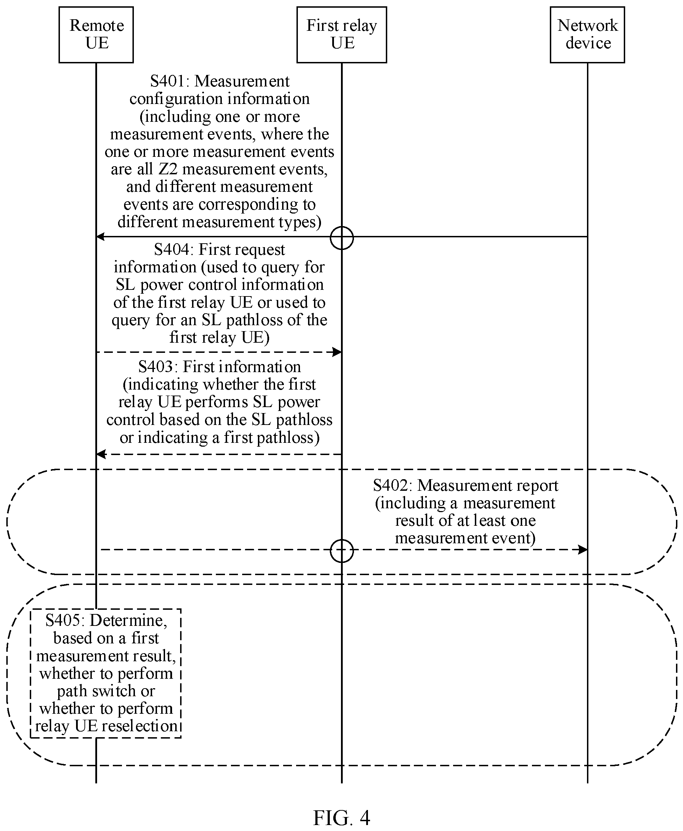

A second communication method according to an embodiment of this application is described below. FIG. 4 is a flowchart of the method. The method may be applied to the network architectures shown in FIG. 1A and FIG. 1B. For example, a remote UE in the method may be the remote UE in FIG. 1A or FIG. 1B, a first relay UE in the method may be the serving relay UE in FIG. 1A or FIG. 1B, a second relay UE in the method may be the candidate relay UE 1 or the candidate relay UE 2 in FIG. 1A or FIG. 1B, and a network device in the method may be a network device 1 in FIG. 1A or FIG. 1B.

S401: The network device sends measurement configuration information. Correspondingly, the remote UE (represented as a remote UE in FIG. 4) receives the measurement configuration information from the network device. For example, in the architecture in FIG. 1A, the network device may send the measurement configuration information to the remote UE via a serving relay UE (for example, the first relay UE, which is represented as a first relay UE in FIG. 4) of the remote UE. Alternatively, in the architecture in FIG. 1B, the network device may directly send the measurement configuration information to the remote UE. Optionally, the network device may send the measurement configuration information to the remote UE through an RRC message, or may send the measurement configuration information to the remote UE through a system message.

The measurement configuration information includes a measurement reporting configuration, and the measurement reporting configuration may include a measurement event. Optionally, the measurement configuration information may include one or more measurement reporting configurations, and one measurement reporting configuration may include one measurement event. In other words, the measurement configuration information may include one or more measurement events. Measurement events included in different measurement reporting configurations may all be Z2 measurement events, but measurement types related to the measurement events included in the different measurement reporting configurations may be different. If the measurement event is determined, the measurement type can also be determined. For the Z2 measurement event, refer to the descriptions of the embodiment shown in FIG. 2. For example, the measurement configuration information includes a plurality of measurement identifiers, for example, measurement identities (IDs). The measurement identifiers are in one-to-one correspondence with the measurement reporting configurations (or the measurement events). One measurement identifier may be associated with one measurement reporting configuration, or in other words, associated with one measurement event. Optionally, the measurement identifiers, the measurement events, and the measurement reporting configurations may be in one-to-one correspondence with each other. One measurement identifier may be associated with one measurement event and one measurement reporting configuration. The measurement reporting configuration is used by the remote UE to send a measurement report corresponding to the measurement event to the network device. The measurement reporting configuration is, for example, reportConfigNR.

In this embodiment of this application, it is equivalent to that different measurement events are associated with different measurement types. When sending a measurement report to the network device, the remote UE may indicate a measurement event corresponding to the measurement report (for example, the measurement report may include a measurement identifier corresponding to the measurement event). After receiving the measurement report from the remote UE, the network device may be clear about a measurement type corresponding to the measurement result. For example, the network device may be clear about whether SL-RSRP or SD-RSRP of the serving relay UE and SL-RSRP or SD-RSRP of a candidate relay UE are used in the measurement result obtained by the UE. Therefore, the remote UE does not need to additionally indicate, to the network device, the measurement type corresponding to the measurement result. This helps reduce transmission overheads.

Alternatively, the measurement configuration information may not include the measurement reporting configuration, but includes only the measurement identifier. For example, a correspondence between the measurement identifier and the measurement event (or a correspondence among the measurement identifier, the measurement reporting configuration, and the measurement event) has been preconfigured in the network device and the remote UE, or has been preconfigured by the network device for the remote UE (for example, the network device sends the correspondence to the remote UE through another message), or may be predefined in a protocol. In this case, the network device needs to send only the measurement identifier through the measurement configuration information, and the remote UE can determine, based on the measurement identifier, one or more specific measurement events configured by the network device. When sending a measurement report to the network device, the remote UE may include a measurement identifier corresponding to the measurement report in the measurement report. In this case, after receiving the measurement report from the remote UE, based on the measurement identifier, the network device may be clear about a measurement event corresponding to the measurement result, or may be clear about a measurement type. For example, the network device may be clear about whether the remote UE obtains the measurement result by using the SL-RSRP or the SD-RSRP of the serving relay UE and the SL-RSRP or the SD-RSRP of the candidate relay UE. Similarly, in this configuration manner, the remote UE does not need to additionally indicate, to the network device, the measurement type corresponding to the measurement result, and the measurement configuration information does not need to include excessive content, so that transmission overheads can be reduced to a greater extent.

An example in which the measurement configuration information includes the measurement reporting configuration is used below in this embodiment of this application.

Optionally, the measurement event configured by using the measurement configuration information may include any one or more of a measurement event 1 to a measurement event 4.

The measurement event 1 is an event that the SL-RSRP of the candidate relay UE becomes a first offset better than the SL-RSRP of the serving relay UE.

The measurement event 2 is an event that the SD-RSRP of the candidate relay UE becomes a second offset better than the SD-RSRP of the serving relay UE.

The measurement event 3 is an event that the SL-RSRP of the candidate relay UE becomes a third offset better than the SD-RSRP of the serving relay UE.

The measurement event 4 is an event that the SD-RSRP of the candidate relay UE becomes a fourth offset better than the SL-RSRP of the serving relay UE.

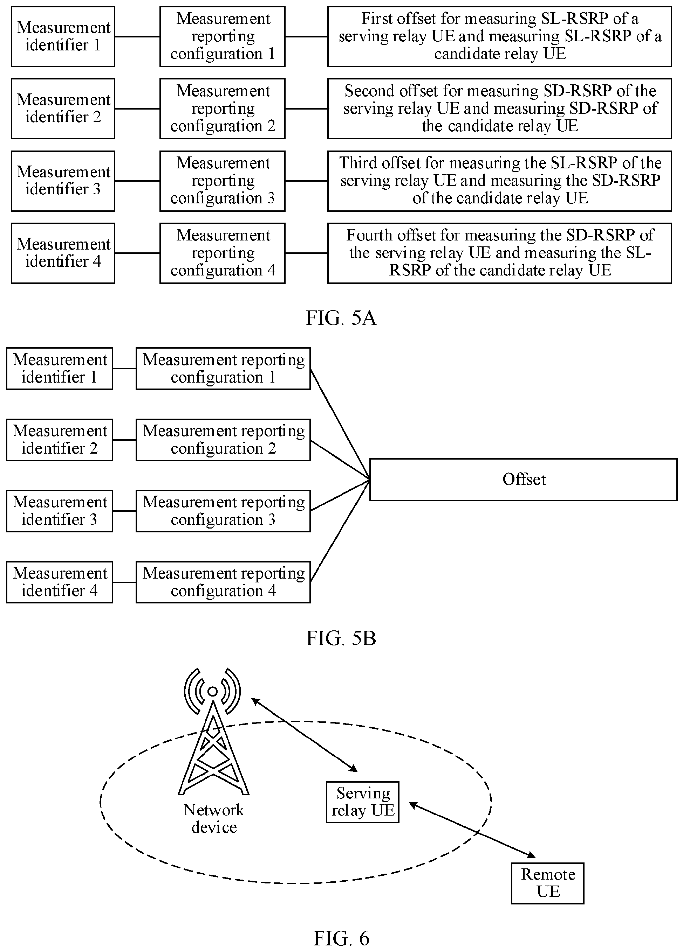

Optionally, the measurement configuration information may configure an offset for the one or more measurement events respectively. For example, one or more offsets may be configured in total. The offsets are in one-to-one correspondence with the measurement events, and different measurement events may be corresponding to different offsets. The measurement event and the offset may be configured together. For example, if a measurement event is not configured, an offset corresponding to the measurement event does not need to be configured. An offset corresponding to a measurement event may be included in a measurement reporting configuration of the measurement event. If the remote UE performs a measurement event, the remote UE may use an offset corresponding to the measurement event. For example, the first offset corresponding to the measurement event 1 is offset1, and both the measurement event 1 and the offset1 are included in a measurement reporting configuration 1; the second offset corresponding to the measurement event 2 is offset2, and both the measurement event 2 and the offset2 are included in a measurement reporting configuration 2; the third offset corresponding to the measurement event 3 is offset3, and both the measurement event 3 and the offset3 are included in a measurement reporting configuration 3; and the fourth offset corresponding to the measurement event 4 is offset4, and both the measurement event 4 and the offset4 are included in a measurement reporting configuration 4. The offset1, the offset2, the offset3, and the offset4 are different from each other. FIG. 5A is a diagram of configuring a plurality of measurement events by using the measurement configuration information. For content such as a reason for configuring different offsets for different measurement events and a factor considered during offset configuration, refer to the descriptions of configuring the first offset for different measurement manners in the embodiment shown in FIG. 2.

Alternatively, a same measurement event may be corresponding to a plurality of first offsets separately, and the remote UE determines a to-be-used first offset based on a configured condition. The measurement event 3 is used as an example. The remote UE may determine, based on SL channel quality of a current serving relay UE or an SL pathloss between the serving relay UE and the remote UE, a to-be-used offset in the plurality of offsets. For example, a threshold or a value range is provided, so that the remote UE determines the to-be-used offset based on whether a threshold condition or a value range condition is satisfied. This solution is applicable to any one of the measurement events 1 to 4. For example, for the measurement event 4, a plurality of corresponding offsets are respectively associated with SL channel quality ranges of the serving relay UE. For example, offset1 in a plurality of fourth offsets is corresponding to that the SL-RSRP of the relay UE is greater than (greater than or equal to) a second threshold. Offset2 in the plurality of fourth offsets is corresponding to that the SL-RSRP of the relay UE is less than or equal to (less than) the second threshold. After receiving the configuration, the remote UE determines, based on an SL channel measurement result of the current serving relay UE, whether to use the offset1 or the offset2 in the Z2 event. For another example, for the measurement event 4, a plurality of corresponding offsets are respectively associated with SL pathloss ranges of the serving relay UE. For example, the offset1 in the plurality of fourth offsets is corresponding to that the SL-RSRP of the relay UE is greater than (greater than or equal to) a third threshold. Offset2 in the plurality of fourth offsets is corresponding to that the SL-RSRP of the relay UE is less than or equal to (less than) the third threshold. After receiving the configuration, the remote UE determines, based on an SL pathloss result between the remote UE and the current serving relay UE, whether to use the offset1 or the offset2 in the Z2 event. In this configuration manner, the remote UE can determine a determining condition for the Z2 measurement event based on a measurement status of the remote UE, to provide a more accurate result to a network.

Alternatively, different measurement events may be corresponding to a same offset. For example, any plurality of the offset1, the offset2, the offset3, and the offset4 may be the same. For example, the offset1 is the same as the offset2, but is different from both the offset3 and the offset4; or the offset2, the offset3, and the offset4 are the same, but are different from the offset1; or the offset1, the offset2, the offset3, and the offset4 are all the same. Optionally, if the offset1 to the offset4 are all the same, the measurement configuration information may still be used to separately configure offsets for the plurality of measurement events, but values of the configured offsets are the same. Alternatively, the measurement configuration information may be used to configure one offset for the plurality of measurement events, and different measurement events are all corresponding to the offset, so that overheads of the measurement configuration information can be reduced. For example, an offset is configured by using the measurement configuration information, and the offset is applicable to each of the measurement event 1 to the measurement event 4. If the measurement configuration information is used to configure one offset for the plurality of measurement events, the offset may be configured provided that any measurement event is configured by using the measurement configuration information. Regardless of a measurement event used by the remote UE, the offset may be used. FIG. 5B is a diagram of configuring one offset by using the measurement configuration information. In this configuration manner, a configuration process can be simplified, and a process in which the remote UE determines whether the Z2 measurement event is satisfied can also be simplified.

When performing measurement based on the measurement ID included in the measurement configuration information, the remote UE may perform measurement based on a measurement object associated with the measurement ID, and evaluate, based on the measurement event in the measurement reporting configuration included in the measurement configuration information, whether to perform reporting. If a measurement event in a measurement reporting configuration associated with a measurement ID is refined to a measurement manner, for example, when only the measurement event included in the measurement reporting configuration is an event that the SD-RSRP of the candidate relay UE becomes the third offset better than the SL-RSRP of the serving relay UE, it should be understood that measurement performed by the remote UE for the measurement ID needs to be performed based on comparison between the SD-RSRP of the candidate relay UE and the SL-RSRP of the serving relay UE.

Optionally, the remote UE may further determine, based on a measurement result of the serving relay UE or a pathloss result between the remote UE and the serving relay UE, an offset configured in the measurement event. For details, refer to the embodiments in FIG. 2 and the descriptions of the second threshold and the third threshold.

A measurement event may be predefined in the protocol. For example, it may be predefined that only the SD-RSRP of the candidate relay UE is allowed to be used. In this case, the measurement configuration information may be used to configure the measurement event 2 and/or the measurement event 3, but may not be used to configure the measurement event 1 and the measurement event 4. Alternatively, it may be predefined in the protocol that only the SD-RSRP of the candidate relay UE is allowed to be used, and comparison is allowed only for measurement results of a same measurement type. This is equivalent to that the remote UE is allowed to measure only the SD-RSRP of the serving relay UE and the SD-RSRP of the candidate relay UE. In this case, the measurement configuration information may be used to configure only the measurement event 2, but may not be used to configure the measurement event 1, the measurement event 3, and the measurement event 4. The measurement result of the SD-RSRP of the serving relay UE is compared with the measurement result of the SD-RSRP of the candidate relay UE. Because neither of the two measurement results is affected by power control caused by the SL pathloss, the comparison is fair. Alternatively, it may be predefined in the protocol that the SD-RSRP and the SL-RSRP of the candidate relay are allowed to be used. In this case, the measurement configuration information may be used to configure any one or more of the measurement event 1 to the measurement event 4. Alternatively, it may be predefined in the protocol that the SD-RSRP and the SL-RSRP of the candidate relay are allowed to be used, and comparison is allowed only for measurement results of a same measurement type. In this case, the measurement configuration information may be used to configure the measurement event 1 and/or the measurement event 2, but may not be used to configure the measurement event 3 and the measurement event 4. Comparison is performed between the measurement results of a same type of the serving relay UE and the candidate relay UE. Because neither of the two measurement results is affected by power control caused by the SL pathloss or both the measurement results are affected by the power control caused by the SL pathloss, the comparison is fair.

Optionally, the measurement configuration information may be further used to configure one or more of the following: whether to report the SL pathloss, a first threshold, the second threshold, or the third threshold. For this part of content, refer to the related descriptions of the embodiment shown in FIG. 2. During reference, the "measurement manner" in the embodiment shown in FIG. 2 may be replaced with the "measurement event" in this embodiment of this application.

Alternatively, one or more of the first threshold, the second threshold, or the third threshold may not be configured by using the measurement configuration information, for example, may be predefined in the protocol, or may be preconfigured in the UE, or may be configured by a higher layer (for example, an RRC layer) of the UE.

Optionally, the method further includes S402: The remote UE sends the measurement report to the network device. Correspondingly, the network device receives the measurement report from the remote UE. For example, the remote UE may send the measurement report to the network device via the first relay UE. The measurement report may include a first measurement result, and the first measurement result is a measurement result obtained by the remote UE for at least one of the measurement events configured by using the measurement configuration information. For another example, in the architecture in FIG. 1B, the remote UE may directly send the measurement report to the network device.

The remote UE may perform measurement based on the measurement configuration information. If neither the second threshold nor the third threshold is configured by using the measurement configuration information (or the second threshold and/or the third threshold are/is not defined in the protocol), the remote UE may send the measurement report to the network device when the measurement result satisfies the measurement event configured by using the measurement configuration information; or if the second threshold and/or the third threshold are/is configured by using the measurement configuration information (or the second threshold and/or the third threshold are/is predefined in the protocol), the remote UE may send the measurement report to the network device when the second threshold and/or the third threshold are/is satisfied and the measurement result satisfies the measurement event configured by using the measurement configuration information. Alternatively, if the second threshold and/or the third threshold are/is configured by using the measurement configuration information (or the second threshold and/or the third threshold are/is predefined in the protocol), an offset parameter of a measurement event may be determined based on the second threshold and/or the third threshold, to determine the measurement event. How to satisfy the second threshold and the third threshold is described in S201.

Optionally, the measurement report may indicate a first pathloss and/or a second pathloss. The first pathloss is an SL pathloss between the remote UE and the first relay UE, and the second pathloss is an SL pathloss between the remote UE and the second relay UE. For more descriptions of this part of related content, for example, when the measurement report indicates the pathloss, how the measurement report indicates the pathloss, and how the remote UE obtains the SL pathloss, refer to the embodiment shown in FIG. 2 (for example, this embodiment of this application may further include S403 and S404, which are respectively similar to S203 and S204 in the embodiment shown in FIG. 2).

For example, if the first measurement result indicates that SL channel quality of the first relay UE becomes the first offset higher than SL channel quality of the second relay UE, the network device determines, based on the measurement identifier included the measurement report, that the remote UE measures the SL-RSRP of the first relay UE, and measures the SD-RSRP of the second relay UE. In this case, optionally, the network device may indicate the remote UE to report the measurement result of the first relay UE. After receiving the measurement result of the first relay UE, the network device may determine whether the remote UE is to perform path switch. For example, if the measurement result of the first relay UE is greater than (or greater than or equal to) a fourth threshold, it indicates that the SL channel quality between the first relay UE and the remote UE is good. In this case, the network device may determine that the remote UE is not to perform path switch. If the measurement result of the first relay UE is less than or equal to (or less than) the fourth threshold, the network device may determine that the remote UE is to perform path switch.

For another example, if the first measurement result indicates that the SL channel quality of the first relay UE becomes the first offset higher than the SL channel quality of the second relay UE, the network device determines, based on the measurement identifier included in the measurement report, that remote UE measures the SL-RSRP of the first relay UE, measures the SD-RSRP of the second relay UE, and the measurement report further indicates the first pathloss. In this case, a determining result of the network device may be that if the first pathloss is less than (or less than or equal to) a fifth threshold, it indicates that a distance between the first relay UE and the remote UE is short. In this case, the SL channel quality between the first relay UE and the remote UE may be good, and the network device may determine that the remote UE is not to perform path switch. If the first pathloss is greater than or equal to (or greater than) the fifth threshold, it indicates that the distance between the first relay UE and the remote UE is long, and the network device may determine that the remote UE is to perform path switch.

Alternatively, for a case in which the remote UE determines whether to perform path switch or whether to perform relay UE reselection, S402 may not be performed. For example, in this case, the method may further include S405: The remote UE determines, based on the first measurement result, whether to perform path switch or whether to perform relay UE reselection.

In this case, information such as the measurement configuration information and a threshold (for example, one or more of the first threshold, the second threshold, or the third threshold) may be preconfigured, or may be delivered by the network device. If the measurement configuration information is determined through preconfiguration, the method may not include S401. The remote UE may perform measurement and measurement comparison based on the configured information, but does not need to report the measurement report to the network. Instead, the remote UE performs determining by itself, to determine whether to perform relay UE reselection. Optionally, in this case, the measurement configuration information may not include the measurement identifier and the measurement reporting configuration, for example, include the offset (for example, include one or more of the first offset to the fourth offset or include one offset applicable to various types of measurement events), and optionally include a measurement event (or include a correspondence between the measurement event and the offset) and/or a threshold (for example, one or more of the first threshold, the second threshold, or the third threshold).

In this embodiment of this application, for the case in which the network device determines whether the remote UE is to perform path switch or relay UE reselection, the network device may configure different measurement events, to distinguish between the measurement types, so that the network device can learn of a specific status on a current SL, and can also obtain more information to determine whether the remote UE is to perform path switch or relay UE reselection. This reduces a probability that the network device improperly or incorrectly determines whether the remote UE is to perform path switch or relay UE reselection.

For the case in which the remote UE determines whether to perform path switch or relay UE reselection, the remote UE is clear about the correspondence between the offset and the measurement event, and therefore can determine a measurement type corresponding to the corresponding offset, so that a decision result obtained by the remote UE on whether to perform path switch or relay UE reselection can be more accurate. Optionally, the remote UE may further determine a corresponding threshold, so that the remote UE can determine, in a more proper case, whether to perform path switch or relay UE reselection. This further improves the decision accuracy of the remote UE.

Formula 1 is described above, and is a power control formula for a PSSCH on the SL. $P_{\mathrm{PSSCH},D}(i)$ is used in Formula 1, and the parameter is related to a dl-P0-PSSCH-PSCCH parameter configured by the network device. If the network device configures dl-P0-PSSCH-PSCCH,

$$P_{\mathrm{PSSCH},D}(i) = P_{\mathrm{O},D} + 10\,log_{10}\left(2^{\mu} \cdot M_{\mathrm{RB}}^{\mathrm{PSSCH}}(i)\right) + \alpha_D \cdot PL_D$$

[dBm], where $PL_D$ is related to a pathloss on a Uu interface, and $PL_D$ may be determined based on the pathloss on the Uu interface. Because power control of a PSCCH on the SL is related to determined transmit power of the PSSCH on the SL, if the network device configures dl-P0-PSSCH-PSCCH, it is equivalent to that the pathloss on the Uu interface may also affect power control of the PSSCH.

Similarly, a parameter used by the UE to determine an SL power based on the pathloss (or referred to as a downlink pathloss) on the Uu interface further includes dl-P0-PSBCH used to configure a physical sidelink broadcast channel (physical sidelink broadcast channel, PSBCH) and dl-P0-PSFCH used to configure a physical sidelink feedback channel (physical sidelink feedback channel, PSFCH).

However, the remote UE may be located out of coverage (out of coverage, OOC) on the Uu interface, that is, located out of coverage of the network device. FIG. 6 is a diagram of this scenario. In FIG. 6, the remote UE is represented as a remote UE. In this case, if the network device still configures a power control configuration parameter based on the downlink pathloss for the remote UE, for example, the dl-P0-PSSCH-PSCCH parameter (for example, the network device configures the dl-P0-PSSCH-PSCCH parameter for the remote UE directly or through a relay path), when performing SL transmission, for transmission on a corresponding channel, the remote UE needs to calculate transmit power based on a pathloss on a Uu interface. However, because the remote UE is in the OOC state on the Uu interface, the remote UE may not obtain the Uu interface pathloss. Consequently, the remote UE cannot calculate the SL transmit power, and SL transmission cannot be performed.

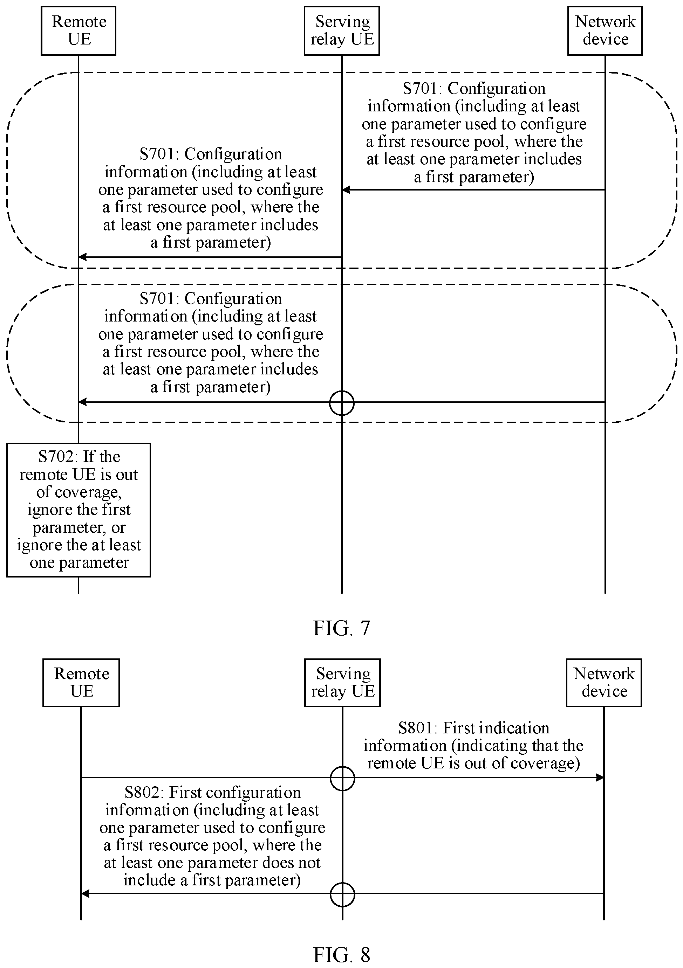

In view of this, an embodiment of this application provides a third communication method. According to the method, the remote UE can also perform SL transmission in an OOC state. FIG. 7 is a flowchart of the method. The method may be applied to the network architecture shown in FIG. 6. For example, a remote UE in the method may be the remote UE in FIG. 6, a serving relay UE in the method may be the serving relay UE in FIG. 6, and a network device in the method may be the network device in FIG. 6.

S701: The network device sends configuration information. Correspondingly, the remote UE (represented as a remote UE in FIG. 7) receives the configuration information.

Optionally, the network device may send the configuration information to the serving relay UE (represented as a serving relay UE in FIG. 7) of the remote UE. After receiving the configuration information, the serving relay UE determines that the configuration information is information used by the remote UE for configuration. In this case, the serving relay UE may send the configuration information to the remote UE. In this case, the remote UE may receive the configuration information from the serving relay UE.

Alternatively, the network device may directly send the configuration information to the remote UE through a relay path between the network device and the remote UE. In this case, the remote UE may receive the configuration information from the network device via the serving relay UE.

Optionally, the configuration information may be included in a system message, for example, a system information block 12 (system information block12, SIB 12), or another system message. For example, in a scenario in which the remote UE can receive the configuration information from the serving relay UE, the network device may send the configuration information through the SIB12. In this case, the serving relay UE may receive the SIB12. Then, the serving relay UE sends the SIB12 to the remote UE.

Alternatively, the configuration information may be included in dedicated signaling, for example, an RRC message. The RRC message is, for example, an RRC reconfiguration (RRC reconfiguration) message, or may be another RRC message. For example, in a scenario in which the remote UE receives the configuration information from the network device via the serving relay UE, the network device may send the configuration information to the remote UE through dedicated signaling.

The configuration information may include at least one parameter used to configure a first resource pool. The resource pool in this embodiment of this application is, for example, an SL resource pool, which may be used to perform SL transmission between the remote UE and another UE. Optionally, the configuration information may be used to configure one or more resource pools. In this case, the configuration information may include one or more sets of parameters used to configure the one or more resource pools. One set of parameters is used to configure one resource pool, the first resource pool is any resource pool in the one or more resource pools, and the at least one parameter is a set of parameters used to configure the first resource pool.

The at least one parameter may include a first parameter, and the first parameter may be used by the remote UE to perform SL power control based on a pathloss between the remote UE and the network device. For example, the first parameter may indicate to perform SL power control based on the pathloss between the remote UE and the network device, or the first parameter may indicate a value of P0 in SL power control performed based on a downlink pathloss of the remote UE, or the first parameter is used by the remote UE to perform SL power control based on the downlink pathloss of the remote UE. For example, the first parameter is a dl-P0-PSSCH-PSCCH parameter, or the first parameter is dl-PO-PSBCH, or the first parameter is dl-P0-PSFCH or another power control parameter. This is not limited herein. For example, in the one or more sets of parameters, each set of parameters in at least one set of parameters may include the first parameter. In other words, in a parameter that is included in the configuration information and that is used to configure the one or more resource pools, a parameter that may be used to configure each resource pool in at least one of the resource pools includes the first parameter, and the first resource pool is any one of the at least one resource pool. A manner in which the remote UE processes the parameter used to configure the at least one resource pool may be similar. The first resource pool is used as an example in this specification.

In this embodiment, the first parameter may be dl-P0-PSSCH-PSCCH, indicating the value of the parameter P0 in power control performed by the remote UE on the PSCCH/PSSCH based on the downlink pathloss. Alternatively, the first parameter may be dl-PO-PSBCH, indicating the value of the parameter P0 in power control performed by the remote UE on a PSBCH based on the downlink pathloss. Alternatively, the first parameter may be dl-P0-PSFCH, indicating the value of the parameter P0 in power control performed by the remote UE on a PSFCH based on the downlink pathloss. The first parameter may further include another parameter that affects the SL power control. This is not limited herein. When receiving the first parameter, the terminal performs SL power control based on the first parameter provided by a network and by considering the downlink pathloss. When the first parameter is not received, it is considered that the power control based on the downlink pathloss is disabled. For example, when the terminal does not receive dl-P0-PSSCH-PSCCH, it is considered that the power control based on downlink pathloss on the PSCCH/PSSCH is disabled.

S702: If the remote UE is out of coverage, ignore the first parameter, and consider that the first parameter is not configured or is not provided; or ignore the at least one parameter, consider that the at least one parameter is not configured or is not provided; or disable the first parameter; or disable the sidelink power control performed based on the pathloss between the remote UE and the network device.

If the remote UE is in the OOC, the remote UE probably cannot obtain a Uu interface pathloss between the remote UE and the network device. Therefore, the remote UE may ignore the first parameter. For example, a remaining parameter other than the first parameter in the at least one parameter is normally used, but the first parameter is not used. In this case, the first resource pool is equivalent to being configured for the remote UE, and the remote UE may use the first resource pool, but it is considered that the first resource pool is not configured or the first parameter is not provided. If the remote UE performs SL transmission by using a resource in the first resource pool, the pathloss between the remote UE and the network device does not need to be considered. For example, a manner in which the remote UE ignores the first parameter is as follows: A higher layer (for example, an RRC layer) of the remote UE submits another parameter other than the first parameter in the at least one parameter to a lower layer (for example, a medium access control (medium access control, MAC) layer or a physical (PHY) layer) of the remote UE, and does not submit the first parameter in the at least one parameter to the lower layer.

Alternatively, if the remote UE is in the OOC, the remote UE may ignore the at least one parameter. In other words, none of the at least one parameter is used. In this case, it is equivalent to that the remote UE does not accept configuration of the first resource pool. In this case, the remote UE cannot use the first resource pool. Therefore, this manner may also be described as that the remote UE ignores the first resource pool, or ignores the configuration of the first resource pool. This execution manner is simple. The remote UE does not need to identify the first parameter from the at least one parameter, but ignores the at least one parameter completely. For example, a manner in which the remote UE ignores the at least one parameter is that a higher layer (for example, an RRC layer) of the remote UE does not deliver the at least one parameter to the lower layer (for example, the MAC layer or the physical layer) of the remote UE.

For example, in code, the configuration information is a code block, and the code block includes a plurality of code segments. One code segment (for example, referred to as a code segment A) in the code segments is used to configure the first resource pool, and includes information about the at least one parameter. For example, in code, that the remote UE ignores the first parameter may be represented as that the remote UE may ignore information A in the code segment A, and the information A represents the first parameter. For example, in code, that the remote UE ignores the at least one parameter (or ignores the first resource pool or ignores the configuration of the first resource pool) may be represented as that the remote UE may ignore the code segment A.

Alternatively, if the remote UE is in the OOC, the remote UE disables the first parameter. In other words, when the remote UE receives the first parameter, it is considered that the SL power control based on the downlink pathloss is disabled in the configuration of the resource pool. For example, when it is determined that the remote UE is in the OOC and when the at least one parameter received by the remote UE includes the first parameter, the remote UE considers that the SL power control based on the downlink pathloss is disabled or not configured, and therefore does not provide the first parameter to the lower layer.

In this embodiment, the first parameter may be dl-P0-PSSCH-PSCCH, indicating the value of the parameter P0 in power control performed by the remote UE on the PSCCH/PSSCH based on the downlink pathloss. Alternatively, the first parameter may be dl-PO-PSBCH, indicating the value of the parameter P0 in power control performed by the remote UE on the PSBCH based on the downlink pathloss. Alternatively, the first parameter may be dl-P0-PSFCH, indicating the value of the parameter P0 in power control performed by the remote UE on the PSFCH based on the downlink pathloss. The first parameter may further include another parameter that affects the SL power control. This is not limited herein. After receiving the first parameter, the remote UE has different behavior based on a coverage status of the remote UE. When receiving the first parameter, the remote UE within the coverage performs SL power control based on the first parameter provided by the network and by considering the downlink pathloss. When receiving the first parameter, the remote UE outside the coverage considers that the power control based on the downlink pathloss is disabled. For example, when receiving dl-P0-PSSCH-PSCCH, the remote UE in the OOC considers that the power control based on the downlink pathloss on the PSCCH/PSSCH is disabled, or ignores dl-P0-PSSCH-PSCCH, or considers that dl-P0-PSSCH-PSCCH is not configured. For another example, when receiving dl-P0-PSFCH, the remote UE in the OOC considers that the power control based on the downlink pathloss on the PSFCH is disabled, or ignores dl-P0-PSFCH, or considers that dl-P0-PSFCH is not configured. For another example, when receiving dl-PO-PSBCH, the remote UE in the OOC considers that the power control based on the downlink pathloss on the PSBCH is disabled, or ignores dl-PO-PSBCH, or considers that dl-P0-PSBCH is not configured.

In this embodiment of this application, even if the remote UE in the OOC receives the first parameter, the remote UE may ignore the first parameter or do not use the first parameter, or consider that the first parameter is not configured or not provided, or consider that the power control based on the downlink pathloss is disabled or not configured. In this case, the remote UE in the OOC does not need to perform SL power control based on the pathloss of the Uu interface, to improve a success rate of calculating the SL transmit power. This improves a success rate of the SL transmission. In addition, in this embodiment of this application, the higher layer of the remote UE may determine whether to send a corresponding parameter to the lower layer. Alternatively, in the OOC case, the higher layer determines whether a current function is configured or disabled, and the lower layer needs to perform only a corresponding operation based on the received parameter and does not need to change SL power control logic of the lower layer.

Next, an embodiment of this application provides a fourth communication method. According to the method, the remote UE can also perform SL transmission in an OOC state. FIG. 8 is a flowchart of the method. The method may be applied to the network architecture shown in FIG. 6. For example, a remote UE in the method may be the remote UE in FIG. 6, a serving relay UE in the method may be the serving relay UE in FIG. 6, and a network device in the method may be the network device in FIG. 6.

S801: The remote UE (represented as a remote UE in FIG. 8) sends first indication information. Correspondingly, the network device receives the first indication information. The first indication information may indicate that the remote UE is in out of coverage, for example, indicate that the remote UE is in OOC.

Optionally, the remote UE may send the first indication information to the network device when a coverage status of the remote UE changes, so that the network device can learn of the coverage status of the remote UE in a timely manner. For example, when the coverage status of the remote UE changes from in-coverage to out-of-coverage, the remote UE may send the first indication information to the network device.

Optionally, the remote UE may periodically send the first indication information to the network device, so that the network device can continuously learn of the coverage status of the remote UE. For example, the remote UE sends the first indication information to the network device based on a periodicity T1 configured by a network or a preconfigured periodicity T2. T1 may be the same as or different from T2.

The first indication information may be carried in dedicated signaling, and is sent to the network device via the serving relay UE (represented as a serving relay UE in FIG. 8) of the remote UE. The dedicated signaling is, for example, an RRC message, or may be sidelink user equipment information (sidelink UE information, SUI) or the like.

For example, if a relay path (for example, an RRC connection) between the remote UE and the network device has not been established, the remote UE may send the first indication information to the network device through the RRC message. The RRC message may be used to request to establish the relay path (for example, the RRC connection) between the remote UE and the network device, and may further include the first indication information. Therefore, the first indication information may not be sent through additional signaling, to reduce transmission overheads. The RRC message is, for example, an RRC connection setup request message, an RRC connection resume request message, or an RRC connection reestablishment request message.

For another example, if the relay path (for example, the RRC connection) between the remote UE and the network device has been established, the remote UE may send the first indication information to the network device through the SUI.

Alternatively, the first indication information may be sent to the serving relay UE of the remote UE. Then, the first indication information is sent by the serving relay UE to the network device. For example, the remote UE may send the first indication information to the serving relay UE through a PC5-signaling (signaling, S) message, a discovery message, a PC5-RRC message, or the like. Then, the serving relay UE sends the first indication information to the network device through an RRC message or another message.

This step may be used separately from subsequent steps or in combination with other embodiments. This is not limited herein.

S802: The network device sends first configuration information. Correspondingly, the remote UE receives the first configuration information.

The network device may send the first configuration information to the remote UE via the serving relay UE. For example, the network device sends the first configuration information through dedicated signaling, for example, an RRC message.

Alternatively, the network device may send the first configuration information to the serving relay UE of the remote UE, and the serving relay UE sends the first configuration information to the remote UE. For example, the network device sends the first configuration information through a system message like a SIB12, and the serving relay UE may receive the SIB12 and send the SIB12 to the remote UE.

The first configuration information may include at least one parameter used to configure a first resource pool. The resource pool in this embodiment of this application is, for example, an SL resource pool, which may be used to perform SL transmission between the remote UE and another UE. Optionally, the first configuration information may be used to configure one or more resource pools. In this case, the first configuration information may include one or more sets of parameters used to configure the one or more resource pools. One set of parameters is used to configure one resource pool, the first resource pool is any resource pool in the one or more resource pools, and the at least one parameter is a set of parameters used to configure the first resource pool.

The network device receives the first indication information, and determines that the remote UE is in the OOC. Therefore, the at least one parameter does not include a first parameter. This is equivalent to that the network device does not deliver the first parameter. The first parameter may indicate to perform SL power control based on a pathloss between the remote UE and the network device. For example, the first parameter is a dl-P0-PSSCH-PSCCH parameter. For the remote UE that does not send the first indication information, the at least one parameter delivered by the network device may include the first parameter. For example, in the one or more sets of parameters, each set of parameters in at least one set of parameters may not include the first parameter. In other words, in a parameter that is included in the configuration information and that is used to configure the one or more resource pools, a parameter that may be used to configure each resource pool in at least one of the resource pools does not include the first parameter, and the first resource pool is any one of the at least one resource pool. The first resource pool is used as an example in this specification.

In this embodiment of this application, the network device is enabled to learn that the remote UE is in the OOC, so that parameters delivered by the network device can be reduced, and transmission overheads can be reduced. In addition, the remote UE needs to perform only processing based on a received parameter, and does not need to change SL power control logic of the remote UE.

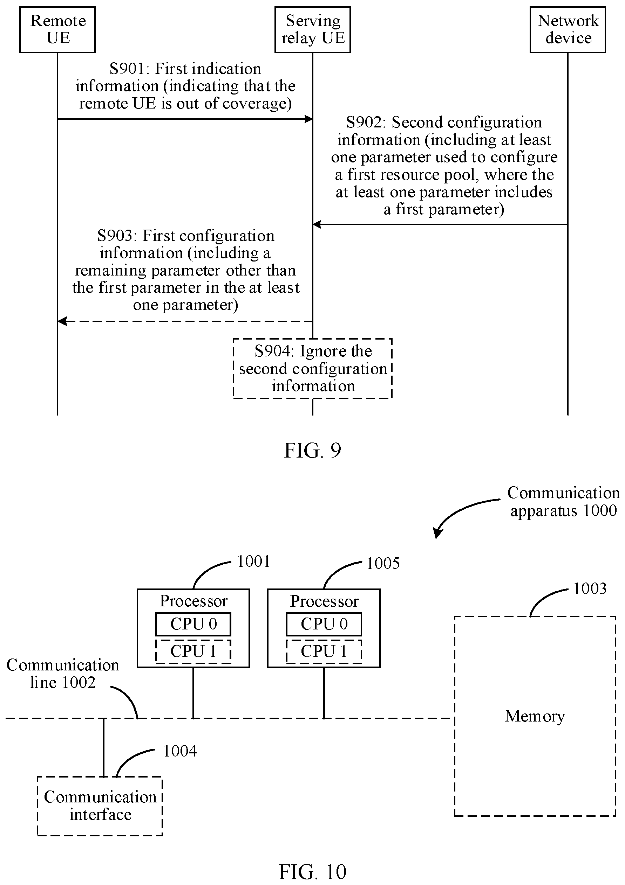

Next, an embodiment of this application provides a fifth communication method. According to the method, the remote UE can also perform SL transmission in an OOC state. FIG. 9 is a flowchart of the method. The method may be applied to the network architecture shown in FIG. 6. For example, a remote UE in the method may be the remote UE in FIG. 6, a serving relay UE in the method may be the serving relay UE in FIG. 6, and a network device in the method may be the network device in FIG. 6.

S901: The remote UE (represented as a remote UE in FIG. 8) sends first indication information. Correspondingly, the serving relay UE (represented as a serving relay UE in FIG. 8) receives the first indication information. The serving relay UE is a serving relay UE of the remote UE. The first indication information may indicate that the remote UE is in out of coverage, for example, indicate that the remote UE is in OOC.

Optionally, the remote UE may send the first indication information to the serving relay UE when a coverage status of the remote UE changes, so that the serving relay UE can learn of the coverage status of the remote UE in a timely manner. For example, when the coverage status of the remote UE changes from in-coverage to out-of-coverage, the remote UE may send the first indication information to the serving relay UE.

Optionally, the remote UE may periodically send the first indication information to the serving relay UE, so that the serving relay UE can continuously learn of the coverage status of the remote UE. For example, the remote UE sends the first indication information to the relay UE based on a periodicity T1 configured by a network or a preconfigured periodicity T2. T1 may be the same as or different from T2.

Optionally, the remote UE may send the first indication information to the serving relay UE through a PC5-S message, a discovery message, a PC5-RRC message, or the like.

This step may be used separately from subsequent steps or in combination with other embodiments. This is not limited herein.

S902: The network device sends second configuration information. Correspondingly, the serving relay UE receives the second configuration information. S901 may be performed before S902, may be performed after S902, or may be performed simultaneously with S902.

For example, the network device may send the second configuration information to the serving relay UE. Then, the serving relay UE sends a corresponding configuration to the remote UE. For example, the network device sends the second configuration information through a system message like a SIB12, and the serving relay UE may receive the SIB12.

The second configuration information may include at least one parameter used to configure a first resource pool. The resource pool in this embodiment of this application is, for example, an SL resource pool, which may be used to perform SL transmission between the remote UE and another UE. Optionally, the second configuration information may be used to configure one or more resource pools. In this case, the second configuration information may include one or more sets of parameters used to configure the one or more resource pools. One set of parameters is used to configure one resource pool, the first resource pool is any resource pool in the one or more resource pools, and the at least one parameter is a set of parameters used to configure the first resource pool.

The at least one parameter may include a first parameter, and the first parameter may indicate to perform SL power control based on a pathloss between the remote UE and the network device. For example, the first parameter is a dl-P0-PSSCH-PSCCH parameter. For example, in the one or more sets of parameters, each set of parameters in at least one set of parameters may include the first parameter. In other words, in a parameter that is included in the second configuration information and that is used to configure the one or more resource pools, a parameter that may be used to configure each resource pool in at least one of the resource pools includes the first parameter, and the first resource pool is any one of the at least one resource pool. A manner in which the serving relay UE processes the parameter used to configure the at least one resource pool may be similar. The first resource pool is used as an example in this specification.

Because the serving relay UE receives the first indication information, and determines that the remote UE is in the OOC, the serving relay UE may not directly forward the second configuration information to the remote UE. Optionally, the method may further include S903: The serving relay UE sends first configuration information to the remote UE. Correspondingly, the remote UE receives the first configuration information from the serving relay UE. For example, the serving relay UE may obtain the first configuration information based on the second configuration information, and send the first configuration information to the remote UE. The first configuration information may include a remaining parameter other than the first parameter in the at least one parameter. An optional manner in which the serving relay UE obtains the first configuration information based on the second configuration information is as follows: The serving relay UE removes the first parameter from the at least one parameter included in the second configuration information, to obtain the first configuration information. The serving relay UE removes only the first parameter, and the another parameter may still be sent to the remote UE, so that the remote UE can obtain the configuration of the network device.

Alternatively, optionally, the method may further include S904: The serving relay UE ignores the second configuration information, or ignores the at least one parameter. For example, if the second configuration information includes only the at least one parameter, but does not include a parameter used to configure another resource pool, the serving relay UE may ignore the second configuration information. Alternatively, if the second configuration information includes the plurality of sets of parameters used to configure the plurality of resource pools, but each set of parameters includes the first parameter, the serving relay UE may also ignore the second configuration information. Alternatively, if the second configuration information includes the plurality of sets of parameters used to configure the plurality of resource pools, and each set of parameters in at least one set of parameters does not include the first parameter, the serving relay UE may ignore the at least one parameter but does not ignore the second configuration information. For example, the serving relay UE may send the remaining parameter included in the second configuration information to the remote UE, and the remaining parameter may not include the first parameter. The serving relay UE may ignore an entire set of configuration parameters of the resource pool or ignore configuration information. This is easier to implement for the serving relay UE, and can also reduce overheads of transmission between the serving relay UE and the remote UE.

In this embodiment of this application, the serving relay UE is enabled to learn that the remote UE is in the OOC, so that parameters sent by the serving relay UE can be reduced, and transmission overheads can be reduced. In addition, the remote UE needs to perform only processing based on a received parameter, and does not need to change SL power control logic of the remote UE.

FIG. 10 is a diagram of a structure of a communication apparatus according to an embodiment of this application. The communication apparatus 1000 may be the remote UE in the embodiment shown in any one of FIG. 2, FIG. 4, FIG. 7, FIG. 8, or FIG. 9 or a circuit system of the remote UE, and is configured to implement the method corresponding to the remote UE in the foregoing method embodiments. Alternatively, the communication apparatus 1000 may be the network device in the embodiment shown in any one of FIG. 2, FIG. 4, FIG. 7, FIG. 8, or FIG. 9 or a circuit system of the network device, and is configured to implement the method corresponding to the network device in the foregoing method embodiments. Alternatively, the communication apparatus 1000 may be the serving relay UE in the embodiment shown in FIG. 9 or a circuit system of the serving relay UE, and is configured to implement the method corresponding to the serving relay UE in the foregoing method embodiments. For specific functions, refer to the descriptions of the foregoing method embodiments. For example, a circuit system is a chip system.

The communication apparatus 1000 includes at least one processor 1001. The processor 1001 may be configured to perform internal processing of the apparatus, to implement a specific control processing function. Optionally, the processor 1001 includes instructions. Optionally, the processor 1001 may store data. Optionally, different processors may be independent components, and may be located at different physical locations or may be located on different integrated circuits. Optionally, different processors may be integrated into one or more processors, for example, integrated into one or more integrated circuits.

Optionally, the communication apparatus 1000 includes one or more memories 1003, configured to store instructions. Optionally, the memory 1003 may further store data. The processor and the memory may be separately disposed, or may be integrated together.

Optionally, the communication apparatus 1000 includes a communication line 1002 and at least one communication interface 1004. The memory 1003, the communication line 1002, and the communication interface 1004 are all optional, and therefore are all represented by dashed lines in FIG. 10.

Optionally, the communication apparatus 1000 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement receiving and sending functions of the communication apparatus 1000 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1001 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1002 may include a path for transmission of information between the foregoing components.

The communication interface 1004 may be any apparatus like a transceiver, and is configured to communicate with another device or a communication network, such as Ethernet, a radio access network (radio access network, RAN), a wireless local area network (wireless local area network, WLAN), or a wired access network.

The memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in an instruction or data structure form and can be accessed by a computer, but is not limited thereto. The memory 1003 may exist alone, and is connected to the processor 1001 through the communication line 1002. Alternatively, the memory 1003 may be integrated with the processor 1001.

The memory 1003 is configured to store computer-executable instructions for executing the solutions of this application, and the processor 1001 controls the execution. The processor 1001 is configured to execute the computer-executable instructions stored in the memory 1003, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 1001 may include one or more CPUs, such as a CPU 0 and a CPU 1 in FIG. 10.

During specific implementation, in an embodiment, the communication apparatus 1000 may include a plurality of processors such as the processor 1001 and a processor 1005 in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 10 is a chip, for example, a chip of the remote UE, a chip of the network device, or a chip of the serving relay UE, the chip includes the processor 1001 (which may further include the processor 1005), the communication line 1002, and the communication interface 1004. Optionally, the apparatus may further include the memory 1003. For example, the communication interface 1004 may be an input interface, a pin, a circuit, or the like. The memory 1003 may be a register, a buffer, or the like. The processor 1001 and the processor 1005 each may be a general-purpose CPU, a microprocessor, an ASIC, or one or more integrated circuits configured to control program execution of the method in any one of the foregoing embodiments.

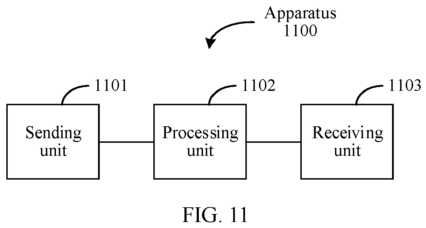

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the module division is an example, and is merely a logical function division. During actual implementation, another division manner may be used. For example, when each functional module is obtained through division based on each corresponding function, FIG. 11 is a diagram of an apparatus. The apparatus 1100 may be the remote UE, the network device, or the serving relay UE in the foregoing method embodiments, or a chip in the remote UE, a chip in the network device, or a chip in the serving relay UE. The apparatus 1100 includes a sending unit 1101, a processing unit 1102, and a receiving unit 1103.

It should be understood that the apparatus 1100 may be configured to implement the steps performed by the remote UE, the network device, or the serving relay UE in the method in embodiments of this application. For related features, refer to the foregoing embodiments. Details are not described herein again.

Optionally, functions/implementation processes of the sending unit 1101, the receiving unit 1103, and the processing unit 1102 in FIG. 11 may be implemented by the processor 1001 in FIG. 10 by invoking the computer-executable instructions stored in the memory 1003. Alternatively, a function/an implementation process of the processing unit 1102 in FIG. 11 may be implemented by the processor 1001 in FIG. 10 by invoking the computer-executable instructions stored in the memory 1003, and functions/implementation processes of the sending unit 1101 and the receiving unit 1103 in FIG. 11 may be implemented through the communication interface 1004 in FIG. 10.

Optionally, when the apparatus 1100 is a chip or a circuit, the functions/implementation processes of the sending unit 1101 and the receiving unit 1103 may alternatively be implemented by a pin, a circuit, or the like.

This application further provides a computer-readable storage medium. The computer-readable storage medium stores a computer program or instructions. When the computer program or the instructions are run, the method performed by the remote UE, the network device, or the serving relay UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the remote UE, the network device, or the serving relay UE in any one of the foregoing method embodiments.

An embodiment of this application further provides a processing apparatus, including a processor and an interface. The processor is configured to perform the method performed by the remote UE, the network device, or the serving relay UE in any one of the foregoing method embodiments.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor can read information from the storage medium and write information to the storage medium. Alternatively, the storage medium may be integrated into a processor. The processor and the storage medium may be disposed in an ASIC, and the ASIC may be disposed in a terminal device. Alternatively, the processor and the storage medium may be disposed in different parts of the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

**Claims**

1. A communication method, applied to a remote device, wherein the method comprises:

   receiving measurement configuration information, wherein the measurement configuration information comprises a measurement event, and the measurement event is an event that signal quality of a candidate relay device becomes a first offset better than signal quality of a serving relay device; and
   sending a measurement report to a network device, wherein the measurement report comprises a first measurement result and first indication information, the first measurement result is a result of measurement performed by the remote device based on the measurement configuration information, and the first indication information indicates a measurement type corresponding to the first measurement result.

2. The method according to claim 1, wherein the measurement type corresponding to the first measurement result comprises one or more of the following:

   a measurement result of a first relay device is sidelink reference signal received power SL-RSRP;
   a measurement result of a first relay device is sidelink discovery reference signal received power SD-RSRP;
   a measurement result of a second relay device is SL-RSRP;
   a measurement result of a second relay device is SD-RSRP;
   whether a measurement result of a first relay device is SL-RSRP; or
   whether a measurement result of a second relay device is SL-RSRP, wherein
   the first relay device is a serving relay device of the remote device, and the second relay device is a candidate relay device of the remote device.

3. The method according to claim 1 or 2, wherein

   the measurement report further indicates a first pathloss and/or a second pathloss; or
   the first measurement result indicates a first pathloss and/or a second pathloss, wherein
   the first pathloss is a sidelink pathloss between the remote device and the first relay device, the second pathloss is a sidelink pathloss between the remote device and the second relay device, the first relay device is the serving relay device of the remote device, and the second relay device is the candidate relay device of the remote device.

4. The method according to claim 3, wherein indicating the first pathloss comprises:

comprising a value of the first pathloss; or
comprising second indication information, wherein the second indication information indicates a range to which a value of the first pathloss belongs, or indicates whether the value of the first pathloss is greater than a first threshold.

5. The method according to claim 3 or 4, wherein the method further comprises:

sending first request information to the first relay device, wherein the first request information is used to query for sidelink power control information of the first relay device, or query for the sidelink pathloss of the first relay device; and
receiving first information from the first relay device, wherein the first information indicates whether the first relay device performs sidelink power control based on the sidelink pathloss, or indicates the first pathloss.

6. The method according to any one of claims 3 to 5, wherein the method further comprises:

sending second request information to the second relay device, wherein the second request information is used to query for sidelink power control information of the second relay device, or query for the sidelink pathloss of the second relay device; and
receiving second information from the second relay device, wherein the second information indicates whether the second relay device performs sidelink power control based on the sidelink pathloss, or indicates the second pathloss.

7. The method according to any one of claims 1 to 6, wherein sending the measurement report corresponding to the measurement event to the network device comprises:
if the measurement result of the first relay device is less than a second threshold, and/or the sidelink pathloss between the remote device and the first relay device is greater than a third threshold, sending the measurement report to the network device, wherein the first relay device is the serving relay device of the remote device.

8. The method according to any one of claims 1 to 7, wherein the method further comprises:
if the measurement result of the first relay device is greater than the second threshold, and/or the sidelink pathloss between the remote device and the first relay device is less than the third threshold, skipping sending the measurement report, wherein the first relay device is the serving relay device of the remote device.

9. The method according to any one of claims 1 to 6, wherein the method further comprises:
if the measurement result of the first relay device is less than a second threshold, and/or the sidelink pathloss between the remote device and the first relay device is greater than a third threshold, starting measurement for a candidate relay device of the remote device, wherein the first relay device is the serving relay device of the remote device.

10. The method according to any one of claims 1 to 6 or 9, wherein the method further comprises:
if the measurement result of the first relay device is greater than the second threshold, and/or the sidelink pathloss between the remote device and the first relay device is less than the third threshold, skipping measuring the candidate relay device of the remote device, wherein the first relay device is the serving relay device of the remote device.

11. The method according to any one of claims 1 to 10, wherein the measurement configuration information comprises information about at least one measurement manner corresponding to the measurement event.

12. The method according to claim 11, wherein the at least one measurement manner comprises one or more of the following:

measuring the SL-RSRP of the serving relay device, and measuring the SL-RSRP of the candidate relay device;
measuring the SD-RSRP of the serving relay device, and measuring the SD-RSRP of the candidate relay device;
measuring the SL-RSRP of the serving relay device, and measuring the SD-RSRP of the candidate relay device; or
measuring the SD-RSRP of the serving relay device, and measuring the SL-RSRP of the candidate relay device.

13. The method according to any one of claims 1 to 12, wherein the measurement configuration information is further used to configure one or more of the following:

whether to report a measurement type corresponding to a measurement result of the measurement event;
whether to report a sidelink pathloss;
the first threshold, wherein the first threshold is used by the remote device to determine a sidelink pathloss indicated by the measurement report;
the second threshold, wherein the second threshold is a threshold corresponding to the measurement result of the first relay device, and the second threshold is used by the remote device to determine whether to send the measurement report, or used by the remote device to determine the first offset for the measurement event, or used by the remote device to determine whether to measure the candidate relay device, wherein the first relay device is the serving relay device of the remote device; or
the third threshold, wherein the third threshold is a sidelink pathloss threshold, and the third threshold is used by the remote device to determine whether to send the measurement report, or used by the remote device to determine whether to measure the candidate relay device, or used by the remote device to determine the first offset for the measurement event.

14. A communication method, applied to a network device, wherein the method comprises:

sending measurement configuration information to a remote device, wherein the measurement configuration information comprises a measurement event, and the measurement event is an event that signal quality of a candidate relay device becomes a first offset better than signal quality of a serving relay device; and
receiving a measurement report corresponding to the measurement configuration information from the remote device, wherein the measurement report comprises a first measurement result and first indication information, the first measurement result is a result of measurement performed by the remote device based on the measurement configuration information, and the first indication information indicates a measurement type corresponding to the first measurement result.

15. The method according to claim 14, wherein the measurement type corresponding to the first measurement result comprises one or more of the following:

a measurement result of a first relay device is SL-RSRP;
a measurement result of a first relay device is SD-RSRP;
a measurement result of a second relay device is SL-RSRP;
a measurement result of a second relay device is SD-RSRP;
whether a measurement result of a first relay device is SL-RSRP; or
whether a measurement result of a second relay device is SL-RSRP, wherein
the first relay device is a serving relay device of the remote device, and the second relay device is a candidate relay device of the remote device.

16. The method according to claim 14 or 15, wherein

the measurement report further indicates a first pathloss and/or a second pathloss; or
the first measurement result indicates a first pathloss and/or a second pathloss, wherein
the first pathloss is a sidelink pathloss between the remote device and the first relay device, the second pathloss is a sidelink pathloss between the remote device and the second relay device, the first relay device is the serving relay device of the remote device, and the second relay device is the candidate relay device of the remote device.

17. The method according to claim 16, wherein indicating the first pathloss comprises:

comprising a value of the first pathloss; or
comprising second indication information, wherein the second indication information indicates a range to which a value of the first pathloss belongs, or indicates whether the value of the first pathloss is greater than a first threshold.

18. The method according to any one of claims 14 to 17, wherein the measurement configuration information comprises information about at least one measurement manner corresponding to the measurement event.

19. The method according to claim 18, wherein the at least one measurement manner comprises one or more of the following:

measuring the SL-RSRP of the serving relay device, and measuring the SL-RSRP of the candidate relay device;
measuring the SD-RSRP of the serving relay device, and measuring the SD-RSRP of the candidate relay device;
measuring the SL-RSRP of the serving relay device, and measuring the SD-RSRP of the candidate relay device; or
measuring the SD-RSRP of the serving relay device, and measuring the SL-RSRP of the candidate relay device.

20. The method according to any one of claims 14 to 19, wherein the measurement configuration information is further used to configure one or more of the following:

whether to report a measurement type corresponding to a measurement result of the measurement event;
whether to report a sidelink pathloss;
the first threshold, wherein the first threshold is used by the remote device to determine a sidelink pathloss indicated by the measurement report;
a second threshold, wherein the second threshold is a threshold corresponding to the measurement result of the first relay device, and the second threshold is used by the remote device to determine whether to send the measurement report, or used by the remote device to determine the first offset for the measurement event, or used by the remote device to determine whether to measure the candidate relay device, wherein the first relay device is the serving relay device of the remote device; or
a third threshold, wherein the third threshold is a sidelink pathloss threshold, and the third threshold is used by the remote device to determine whether to send the measurement report, or used by the remote device to determine whether to measure the candidate relay device, or used by the remote device to determine the first offset for the measurement event.

21. A communication method, applied to a remote device, wherein the method comprises:

receiving measurement configuration information, wherein the measurement configuration information comprises a measurement event; and
sending a measurement report to a network device, wherein the measurement report comprises a measurement result corresponding to at least one measurement event in the measurement event, wherein
the measurement configuration information comprises any one or more of the following measurement events:

an event that SL-RSRP of a candidate relay device becomes a first offset better than SL-RSRP of a serving relay device;
an event that SD-RSRP of a candidate relay device becomes a second offset better than SD-RSRP of a serving relay device;
an event that SL-RSRP of a candidate relay device becomes a third offset better than SD-RSRP of a serving relay device; or
an event that SD-RSRP of a candidate relay device becomes a fourth offset better than SL-RSRP of a serving relay device.

22. The method according to claim 21, wherein

the measurement report further indicates a first pathloss and/or a second pathloss; or
the first measurement result indicates a first pathloss and/or a second pathloss, wherein
the first pathloss is a sidelink pathloss between the remote device and a first relay device, the second pathloss is a sidelink pathloss between the remote device and a second relay device, the first relay device is a serving relay device of the remote device, and the second relay device is a candidate relay device of the remote device.

23. The method according to claim 22, wherein indicating the first pathloss comprises:

comprising a value of the first pathloss; or
comprising second indication information, wherein the second indication information indicates a range to which a value of the first pathloss belongs, or indicates whether the value of the first pathloss is greater than a first threshold.

24. The method according to claim 22 or 23, wherein the method further comprises:

sending first request information to the first relay device, wherein the first request information is used to query for sidelink power control information of the first relay device, or query for the sidelink pathloss of the first relay device; and

receiving first information from the first relay device, wherein the first information indicates whether the first relay device performs sidelink power control based on the sidelink pathloss, or indicates the first pathloss.

25. The method according to any one of claims 22 to 24, wherein the method further comprises:

sending second request information to the second relay device, wherein the second request information is used to query for sidelink power control information of the second relay device, or query for the sidelink pathloss of the second relay device; and

receiving second information from the second relay device, wherein the second information indicates whether the second relay device performs sidelink power control based on the sidelink pathloss, or indicates the second pathloss.

26. The method according to any one of claims 21 to 25, wherein sending the measurement report corresponding to the measurement event to the network device comprises:
if a measurement result of the first relay device is less than a second threshold, and/or the sidelink pathloss between the remote device and the first relay device is greater than a third threshold, sending the measurement report to the network device, wherein the first relay device is the serving relay device of the remote device.

27. The method according to any one of claims 21 to 26, wherein the method further comprises:
if the measurement result of the first relay device is greater than the second threshold, and/or the sidelink pathloss between the remote device and the first relay device is less than the third threshold, skipping sending the measurement report, wherein the first relay device is the serving relay device of the remote device.

28. The method according to any one of claims 21 to 25, wherein the method further comprises:
if a measurement result of the first relay device is less than a second threshold, and/or the sidelink pathloss between the remote device and the first relay device is greater than a third threshold, starting measurement for the candidate relay device of the remote device, wherein the first relay device is the serving relay device of the remote device.

29. The method according to any one of claims 21 to 25 or claim 28, wherein the method further comprises:
if the measurement result of the first relay device is greater than the second threshold, and/or the sidelink pathloss between the remote device and the first relay device is less than the third threshold, skipping measuring the candidate relay device of the remote device, wherein the first relay device is the serving relay device of the remote device.

30. The method according to any one of claims 21 to 29, wherein the measurement configuration information is further used to configure one or more of the following:

whether to report a sidelink pathloss;
the first threshold, wherein the first threshold is used by the remote device to determine a sidelink pathloss indicated by the measurement report;
the second threshold, wherein the second threshold is a threshold corresponding to the measurement result of the first relay device, and the second threshold is used by the remote device to determine whether to send the measurement report, or used by the remote device to determine the first offset for the measurement event, or used by the remote device to determine whether to measure the candidate relay device, wherein the first relay device is the serving relay device of the remote device; or
the third threshold, wherein the third threshold is a sidelink pathloss threshold, and the third threshold is used by the remote device to determine whether to send the measurement report, or used by the remote device to determine whether to measure the candidate relay device, or used by the remote device to determine the first offset for the measurement event.

31. A communication method, applied to a network device, wherein the method comprises:

sending measurement configuration information to a remote device, wherein the measurement configuration information comprises a measurement event; and
receiving a measurement report from the remote device, wherein the measurement report comprises a measurement result corresponding to at least one measurement event in the measurement event, wherein

the measurement configuration information comprises any one or more of the following measurement events:

an event that SL-RSRP of a candidate relay device becomes a first offset better than SL-RSRP of a serving relay device;

an event that SD-RSRP of a candidate relay device becomes a second offset better than SD-RSRP of a serving relay device;

an event that SL-RSRP of a candidate relay device becomes a third offset better than SD-RSRP of a serving relay device; or

an event that SD-RSRP of a candidate relay device becomes a fourth offset better than SL-RSRP of a serving relay device.

**32.** The method according to claim 31, wherein

the measurement report further indicates a first pathloss and/or a second pathloss; or

the first measurement result indicates a first pathloss and/or a second pathloss, wherein

the first pathloss is a sidelink pathloss between the remote device and a first relay device, the second pathloss is a sidelink pathloss between the remote device and a second relay device, the first relay device is a serving relay device of the remote device, and the second relay device is a candidate relay device of the remote device.

**33.** The method according to claim 32, wherein indicating the first pathloss comprises:

comprising a value of the first pathloss; or

comprising second indication information, wherein the second indication information indicates a range to which a value of the first pathloss belongs, or indicates whether the value of the first pathloss is greater than a first threshold.

**34.** The method according to any one of claims 31 to 33, wherein the measurement configuration information is further used to configure one or more of the following:

whether to report a sidelink pathloss;

the first threshold, wherein the first threshold is used by the remote device to determine a sidelink pathloss indicated by the measurement report;

a second threshold, wherein the second threshold is a threshold corresponding to a measurement result of the first relay device, and the second threshold is used by the remote device to determine whether to send the measurement report, or used by the remote device to determine the first offset for the measurement event, or used by the remote device to determine whether to measure the candidate relay device, wherein the first relay device is the serving relay device of the remote device; or

a third threshold, wherein the third threshold is a sidelink pathloss threshold, and the third threshold is used by the remote device to determine whether to send the measurement report, or used by the remote device to determine whether to measure the candidate relay device, or used by the remote device to determine the first offset for the measurement event.

**35.** A communication method, applied to a remote device, wherein the method comprises:

receiving configuration information, wherein the configuration information comprises at least one parameter used to configure a first resource pool, the at least one parameter comprises a first parameter, and the first parameter is used by the remote device to perform sidelink power control based on a pathloss between the remote device and a network device; and

if the remote device is out of coverage, ignoring the first parameter, or ignoring the at least one parameter, or considering that the first parameter is not configured or provided, or disabling the first parameter, or disabling the sidelink power control performed based on the pathloss between the remote device and the network device.

**36.** The method according to claim 35, wherein receiving the configuration information comprises:

receiving the configuration information from the network device via a relay device; or

receiving the configuration information from a relay device, wherein

the relay device is a serving relay device of the remote device.

37. The method according to claim 35 or 36, wherein the configuration information is comprised in a system message, or comprised in an RRC message.

38. A communication method, applied to a remote device, wherein the method comprises:

sending first indication information, wherein the first indication information indicates that the remote device is out of coverage; and

receiving first configuration information, wherein the first configuration information comprises at least one parameter used to configure a first resource pool, the at least one parameter does not comprise a first parameter, and the first parameter is used by the remote device to perform sidelink power control based on a pathloss between the remote device and a network device.

39. The method according to claim 38, wherein sending the first indication information comprises:

sending the first indication information to the network device via a relay device; or
sending the first indication information to a relay device, wherein
the relay device is a serving relay device of the remote device.

40. The method according to claim 38 or 39, wherein the first indication information is comprised in a radio resource control RRC message, sidelink user equipment information SUI, a PC5-RRC message, a PC5-signaling S message, or a discovery message.

41. A communication method, applied to a network device, wherein the method comprises:

receiving first indication information from a remote device via a relay device, wherein the first indication information indicates that the remote device is out of coverage; and

sending first configuration information, wherein the first configuration information comprises at least one parameter used to configure a first resource pool, the at least one parameter does not comprise a first parameter, and the first parameter is used by the remote device to perform sidelink power control based on a pathloss between the remote device and the network device.

42. A communication method, applied to a relay device, wherein the method comprises:

receiving first indication information from a remote device, wherein the first indication information indicates that the remote device is out of coverage;

receiving second configuration information from a network device, wherein the second configuration information comprises at least one parameter used to configure a first resource pool for the remote device, the at least one parameter comprises a first parameter, and the first parameter is used by the remote device to perform sidelink power control based on a pathloss between the remote device and the network device; and

sending first configuration information to the remote device, wherein the first configuration information comprises a parameter other than the first parameter in the at least one parameter, or ignoring the second configuration information.

43. The method according to claim 42, wherein the method further comprises:
removing the first parameter comprised in the second configuration information, to obtain the first configuration information.

44. A communication apparatus, comprising a processor and a memory, wherein the memory is coupled to the processor, and the processor is configured to perform the method according to any one of claims 1 to 13, the method according to any one of claims 14 to 20, the method according to any one of claims 21 to 30, the method according to any one of claims 31 to 34, the method according to any one of claims 35 to 37, the method according to any one of claims 38 to 40, the method according to claim **41,** or the method according to claim 42 or 43.

45. A computer-readable storage medium, wherein the computer-readable storage medium is configured to store a computer program, and when the computer program is run on a computer, the computer is enabled to perform the method according to any one of claims 1 to 13, the method according to any one of claims **14** to 20, the method according to any one of claims 21 to 30, the method according to any one of claims 31 to 34, the method according to any one of claims 35 to 37, the method according to any one of claims 38 to 40, the method according to claim **41, or** the method according to claim 42 or 43.

46. A chip system, wherein the chip system comprises:
a processor and an interface, wherein the processor is configured to invoke instructions through the interface and run the instructions, and when the processor executes the instructions, the method according to any one of claims 1 to 13, the method according to any one of claims 14 to 20, the method according to any one of claims 21 to 30, the method according to any one of claims 31 to 34, the method according to any one of claims 35 to 37, the method according to any one of claims 38 to 40, the method according to claim 41, or the method according to claim 42 or 43 is implemented.

47. A computer program product, wherein the computer program product comprises a computer program, and when the computer program is run on a computer, the computer is enabled to perform the method according to any one of claims 1 to 13, the method according to any one of claims 14 to 20, the method according to any one of claims 21 to 30, the method according to any one of claims 31 to 34, the method according to any one of claims 35 to 37, the method according to any one of claims 38 to 40, the method according to claim 41, or the method according to claim 42 or 43.

FIG. 1A

FIG. 1B

| Remote UE | First relay UE | Network device |
|---|---|---|

S201: Measurement configuration information (including a measurement event)

S204: First request information (used to query for SL power control information of the first relay UE or used to query for an SL pathloss of the first relay UE)

S203: First information (indicating whether the first relay UE performs SL power control based on the SL pathloss or indicating a first pathloss)

S202: Measurement report (including a first measurement result of the measurement event, and optionally including first indication information, indicating a measurement type corresponding to the first measurement result)

S205: Determine, based on the first measurement result, whether to perform path switch or whether to perform relay UE reselection

FIG. 2

| Measurement identifier | Measurement reporting configuration | Offset 1 for measuring SL-RSRP of a serving relay UE and measuring SL-RSRP of a candidate relay UE |
| | | Offset 2 for measuring SD-RSRP of the serving relay UE and measuring SD-RSRP of the candidate relay UE |
| | | Offset 3 for measuring the SL-RSRP of the serving relay UE and measuring the SD-RSRP of the candidate relay UE |
| | | Offset 4 for measuring the SD-RSRP of the serving relay UE and measuring the SL-RSRP of the candidate relay UE |

FIG. 3A

| Measurement identifier | Measurement reporting configuration | Offset |

FIG. 3B

| Remote UE | First relay UE | Network device |
|---|---|---|

S401: Measurement configuration information (including one or more measurement events, where the one or more measurement events are all Z2 measurement events, and different measurement events are corresponding to different measurement types)

S404: First request information (used to query for SL power control information of the first relay UE or used to query for an SL pathloss of the first relay UE)

S403: First information (indicating whether the first relay UE performs SL power control based on the SL pathloss or indicating a first pathloss)

S402: Measurement report (including a measurement result of at least one measurement event)

S405: Determine, based on a first measurement result, whether to perform path switch or whether to perform relay UE reselection

FIG. 4

| Measurement identifier 1 | Measurement reporting configuration 1 | First offset for measuring SL-RSRP of a serving relay UE and measuring SL-RSRP of a candidate relay UE |
|---|---|---|
| Measurement identifier 2 | Measurement reporting configuration 2 | Second offset for measuring SD-RSRP of the serving relay UE and measuring SD-RSRP of the candidate relay UE |
| Measurement identifier 3 | Measurement reporting configuration 3 | Third offset for measuring the SL-RSRP of the serving relay UE and measuring the SD-RSRP of the candidate relay UE |
| Measurement identifier 4 | Measurement reporting configuration 4 | Fourth offset for measuring the SD-RSRP of the serving relay UE and measuring the SL-RSRP of the candidate relay UE |

FIG. 5A

FIG. 5B

FIG. 6

FIG. 7

FIG. 8

FIG. 9

FIG. 10

Apparatus
1100

```
      1101              1102             1103
 ┌──────────┐     ┌──────────┐    ┌──────────┐
 │ Sending  │     │Processing│    │Receiving │
 │  unit    │─────│  unit    │────│  unit    │
 └──────────┘     └──────────┘    └──────────┘
```

FIG. 11

## INTERNATIONAL SEARCH REPORT

| International application No. |
|---|
| **PCT/CN2023/134332** |

**A.    CLASSIFICATION OF SUBJECT MATTER**

H04W24/10(2009.01)i

According to International Patent Classification (IPC) or to both national classification and IPC

**B.    FIELDS SEARCHED**

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

CNABS, CJFD, CNTXT, ENTXTC, ENTXT, DWPI: 中继, 偏置, 偏移, 切换, 重选, 备用, 备份, 覆盖范围外, 覆盖外, 侧链路, 侧行链路, 配置, relay, offset, handover+, reselect, backup, OOC, SL

**C.    DOCUMENTS CONSIDERED TO BE RELEVANT**

| Category* | Citation of document, with indication, where appropriate, of the relevant passages | Relevant to claim No. |
|---|---|---|
| X | CN 115315985 A (BEIJING XIAOMI MOBILE SOFTWARE CO., LTD.) 08 November 2022 (2022-11-08)<br>    description, paragraphs 0065-0182 | 1-34, 44-47 |
| X | CN 114026889 A (SAMSUNG ELECTRONICS CO., LTD.) 08 February 2022 (2022-02-08)<br>    description, paragraphs 0293-0295 | 35-43, 44-47 |
| A | CN 113453272 A (VIVO COMMUNICATION TECHNOLOGY CO., LTD.) 28 September 2021 (2021-09-28)<br>    entire document | 1-47 |
| A | CN 115053624 A (HUAWEI TECHNOLOGIES CO., LTD.) 13 September 2022 (2022-09-13)<br>    entire document | 1-47 |
| A | US 2020059915 A1 (LG ELECTRONICS INC.) 20 February 2020 (2020-02-20)<br>    entire document | 1-47 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 January 2024** | **29 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/134332** |

| Patent document cited in search report | | | Publication date (day/month/year) | Patent family member(s) | | | Publication date (day/month/year) |
|---|---|---|---|---|---|---|---|
| CN | 115315985 | A | 08 November 2022 | None | | | |
| CN | 114026889 | A | 08 February 2022 | US | 2022353825 | A1 | 03 November 2022 |
| | | | | US | 11805486 | B2 | 31 October 2023 |
| | | | | WO | 2020263064 | A1 | 30 December 2020 |
| | | | | EP | 3915306 | A1 | 01 December 2021 |
| | | | | EP | 3915306 | A4 | 16 March 2022 |
| | | | | US | 2020413348 | A1 | 31 December 2020 |
| | | | | US | 11388678 | B2 | 12 July 2022 |
| | | | | KR | 20210001752 | A | 06 January 2021 |
| CN | 113453272 | A | 28 September 2021 | None | | | |
| CN | 115053624 | A | 13 September 2022 | None | | | |
| US | 2020059915 | A1 | 20 February 2020 | US | 11140663 | B2 | 05 October 2021 |
| | | | | US | 2022030580 | A1 | 27 January 2022 |
| | | | | WO | 2018186667 | A1 | 11 October 2018 |

Form PCT/ISA/210 (patent family annex) (July 2022)

**EP 4 618 613 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211558857
- CN 202211717133
- CN 202310166316